(19) Europäisches Patentamt European Patent Office Office européen des brevets

(11) **EP 4 203 193 B1**

(12) **FASCICULE DE BREVET EUROPEEN**

(45) Date de publication et mention de la délivrance du brevet:
**11.03.2026 Bulletin 2026/11**

(21) Numéro de dépôt: **22215577.2**

(22) Date de dépôt: **21.12.2022**

(51) Classification Internationale des Brevets (IPC):
*H01Q 21/00* $^{(2006.01)}$    *H01Q 21/20* $^{(2006.01)}$
*G01S 3/04* $^{(2006.01)}$    *G01S 3/46* $^{(2006.01)}$

(52) Classification Coopérative des Brevets (CPC):
**G01S 3/043; G01S 3/46; H01Q 1/28; H01Q 9/26; H01Q 21/0087; H01Q 21/205; H01Q 21/24**

(54) **SOLUTION D'OPTIMISATION D'UN COUPLE ANTENNE/RÉSEAU 3D CONFORME À UNE SURFACE**

LÖSUNG ZUR OBERFLÄCHENKONFORMEN OPTIMIERUNG EINES 3D-ANTENNEN-NETZWERK-DREHMOMENTS

SOLUTION FOR OPTIMIZING A SURFACE-CONFORMAL ANTENNA/ARRAY TORQUE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.12.2021 FR 2114395**

(43) Date de publication de la demande:
**28.06.2023 Bulletin 2023/26**

(73) Titulaire: **THALES**
**92190 Meudon (FR)**

(72) Inventeurs:
• **FERREOL, Anne**
  **92622 GENNEVILLIERS Cedex (FR)**
• **HUBERT, William**
  **49309 CHOLET (FR)**
• **THALY, Pierre**
  **49309 CHOLET (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2021 305 693**

• **FLOCH JEAN MARIE: "ICEM-CE modelling View project", 1 June 2018 (2018-06-01), XP055960066, Retrieved from the Internet <URL:https://www.researchgate.net/profile/Jean-Floch/publication/326009780_EUC_2018/links/5b3345e14585150d23d5b6a6/EUC-2018.pdf> [retrieved on 20220912]**

**Description**

**Domaine technique** :

L'invention se situe dans le domaine technique des radiocommunications, et plus particulièrement dans celui des antennes, réseaux d'antennes, et traitements d'antennes avec des techniques de traitement du signal exploitant les signaux de plusieurs voies de réception et/ou d'émission, comme les traitements de radiogoniométrie dont l'objectif est d'estimer la direction d'arrivée ($\theta_m$) d'ondes électromagnétiques provenant de plusieurs émetteurs en champs lointains (front d'onde plan) à partir d'un réseau de capteurs pouvant être disposé sur un support fixe ou sur un porteur, comme par exemple un véhicule, un bateau, un avion ou un drone.

**Technique antérieure** :

L'invention porte sur un procédé de conception d'un réseau d'antennes, dont les caractéristiques conditionnent entièrement les performances de la goniométrie. Les propriétés des réseaux d'antennes dépendent principalement :

- des caractéristiques de l'élément rayonnant (antenne) qui compose le réseau, principalement caractérisé par son diagramme de rayonnement en amplitude, phase et polarisation, et sa variation en fonction de la fréquence,

- de la géométrie du réseau, c'est à dire la position et l'orientation des éléments rayonnants,

- de la structure porteuse du réseau d'éléments rayonnants, qui a une influence sur son comportement et contraint son encombrement maximal.

La demande de brevet US 2021/0305693 A1 décrit une antenne réseau directive 3D.
Les performances de goniométrie se définissent par :

- la robustesse aux ambiguïtés, qui correspond à la capacité du réseau à ne pas confondre les directions des sources avec d'autres directions. D'un point de vue général, cette capacité s'améliore avec le nombre d'antennes du réseau et se dégrade lorsque l'encombrement du réseau augmente pour un nombre fixé d'antennes,

- la précision d'estimation de la direction d'une ou plusieurs sources, qui s'améliore lorsque les dimensions du réseau ainsi que le nombre d'éléments augmentent,

- la résolution entre les directions de deux sources, qui s'améliore lorsque les dimensions du réseau augmentent.

Plus particulièrement, l'objectif est de concevoir un système de goniométrie permettant :

- de traiter un environnement dense en émetteurs : cela nécessite des réseaux ayant de bonnes caractéristiques de robustesse aux ambiguïtés en contexte multi-sources,

- de s'affranchir de la polarisation des antennes des émetteurs ciblés. En effet, il est de plus en plus difficile de maîtriser la polarisation à l'émission avec des émetteurs de plus en plus mobiles en position et orientation, des antennes de moins en moins pures en polarisation à cause des contraintes d'intégration (téléphonie mobile, drones, ...) ou encore des systèmes de transmission MIMO (acronyme anglais pour *Multiple Input Multiple Output,* ou entrées multiples/-sorties multiples) exploitant la diversité de polarisation pour augmenter le débit des transmissions. Cela nécessite la conception de réseaux hétérogènes composés d'antennes identiques ayant des orientations et positions différentes. A noter qu'un réseau hétérogène est moins robuste aux ambiguïtés qu'un réseau homogène composé d'antennes identiques ayant la même orientation,

- d'effectuer une goniométrie 2D en gisement et élévation ($\theta$, $\Delta$), de manière à éviter d'effectuer une goniométrie 1D en gisement devant faire une hypothèse sur l'angle d'élévation des sources. Dans beaucoup de solutions, on suppose que le système de goniométrie et les émetteurs se situent dans le même plan en supposant que l'angle d'élévation $\Delta$ soit nul. Si ce n'est pas le cas on détecte la source sans pouvoir la goniométrer. Cette nécessité d'une goniométrie 2D en ($\theta$, $\Delta$) au lieu d'une goniométrie 1D en gisement a toutefois pour effet de diminuer la robustesse aux ambiguïtés : cela implique de dimensionner des éléments rayonnants dont le diagramme en site est reproductible et mesurable,

- d'utiliser un même réseau dans un domaine fréquentiel le plus étendu possible avec un gain acceptable, ce qui implique de faire appel à des éléments rayonnants compatibles de ce domaine et intégrables au sein d'une structure compacte,

- de pouvoir s'intégrer sur une plateforme dans les domaines terrestres (véhicule), naval (bateau), aéroporté (drone, ballon, avion, ...) en limitant :

  • le couplage des antennes avec la plateforme. Contrairement au couplage mutuel entre antennes du réseau, le couplage avec une plateforme a pour effet de fortement atténuer le gain de toutes les antennes du réseau dans certaines directions et de manière périodique dans l'espace des directions d'arrivées. Ce couplage entre la plateforme et le réseau d'antennes est minimisé en disposant une surface métallique ou un plan de masse entre les antennes et la plateforme,

  • l'encombrement et le poids du réseau. Cela signifie qu'un compromis doit être déterminé entre les performances, la taille et le nombre d'éléments rayonnants du réseau compte tenu de la surface disponible pour l'installer.

L'homme du métier sait concevoir des antennes dont les caractéristiques en termes de gain, polarisation et bande de fréquences dépendent d'un certain nombre de paramètres géométriques sur l'antenne. C'est le cas par exemple de l'antenne « Pétale » décrite dans le brevet Européen EP 3.335.277 B1, utilisée dans la suite de la description pour son haut degré de possibilités d'optimisations, ses performances particulièrement adaptées à la conception d'un réseau d'antennes performant et son encombrement limité par rapport à une performance radioélectrique visée. L'invention peut également s'appliquer de manière identique pour toute famille d'antennes dont les caractéristiques radioélectriques et dimensionnelles sont modifiables en ajustant ses propriétés géométriques, ce qui en pratique est le cas de toutes les antennes. Cependant, la performance du réseau d'antenne mis au point dépend de la capacité des antennes à atteindre un compromis avantageux entre encombrement, faible épaisseur en présence d'une structure métallique et performances radioélectriques sur une large bande de fréquence.

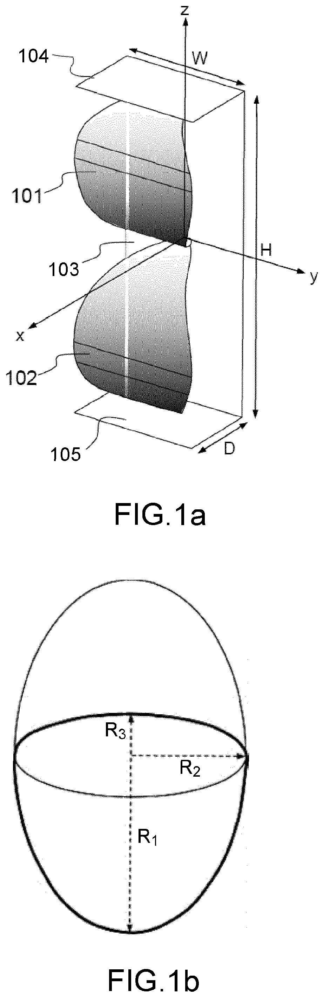

La figure 1a schématise une vue en trois dimensions d'une antenne pétale, utilisée pour illustrer la mise en œuvre du procédé selon l'invention. Elle comprend un premier brin 101 et un deuxième brin 102, repliés vers un plan de masse 103 au centre O de l'antenne et en opposition de phase. Les deux brins 101, 102 ont dans cet exemple une forme elliptique et sont disposés de manière symétrique par rapport au centre de l'antenne. Cependant, d'autres formes de brins sont possibles. Des repliements 104 et 105 situés aux extrémités du plan de masse 103, plus connus sous l'expression de « toits capacitifs », permettent avantageusement d'améliorer les performances radioélectriques de l'antenne en bas de bande. L'antenne a une hauteur H, une largeur W et une profondeur D. La figure 1b représente une des pétales de l'antenne en vue de face. Il est défini par l'intersection de deux ellipses partageant le même rayon transversal $R_2$, ce dernier fixant la largeur totale de l'antenne. Ensuite, le ratio $R_1/R_3$ permet d'optimiser les transitions au niveau de l'alimentation et du repliement terminal du brin.

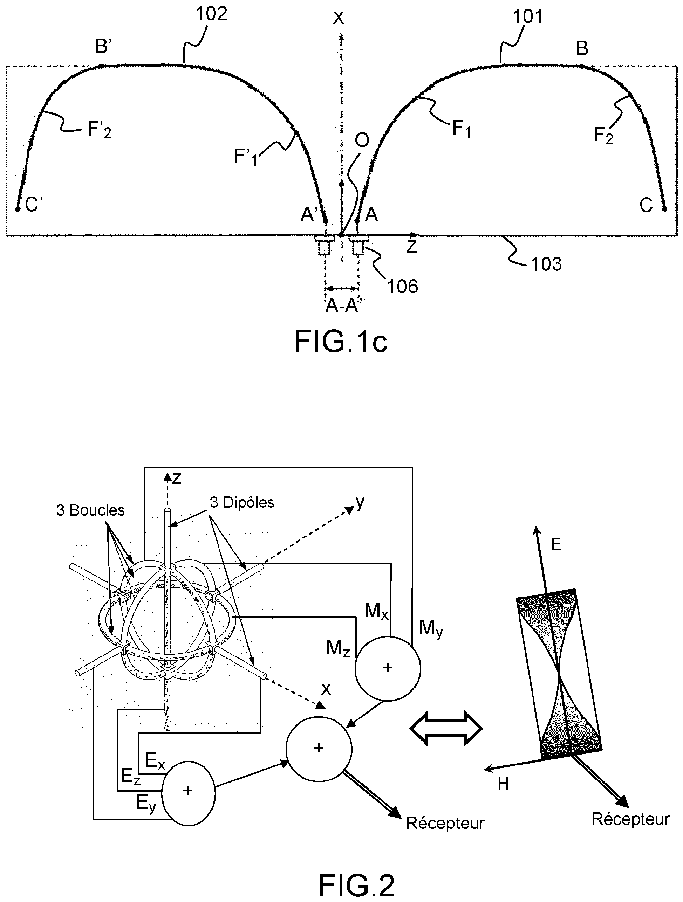

La figure 1c représente une vue de profil de l'antenne pétale. La courbure du brin vers le plan de masse est définie par les points A, B, C et par les équations des courbes $F_1$ et $F_2$. La partie inférieure de l'intersection des deux ellipses est ensuite fixée en A (point d'alimentation 106 du brin) puis passe par B et C.

Soit les coordonnées cartésiennes des points A, B et C, telles que :

$$A = \begin{pmatrix} x_A \\ 0 \\ z_A \end{pmatrix}, B = \begin{pmatrix} x_B \\ 0 \\ z_B \end{pmatrix} \text{ et } C = \begin{pmatrix} x_c \\ 0 \\ z_C \end{pmatrix}.$$

Les équations des courbes sont données par deux paramètres de courbure supplémentaires : $c_1$ et $c_2$. L'équation de $F_1$ est telle que :

$$(F_1) : X = x_B + (x_A - x_B)\frac{e^{zc_1} - e^{z_B c_1}}{e^{z_A c_1} - e^{z_B c_1}}, \forall z \in [z_A, z_B]$$

De même, l'équation de $F_2$ est telle que :

$$(F_2) : X = x_B + (x_C - x_B)\frac{e^{zc_2} - e^{z_B c_2}}{e^{z_C c_2} - e^{z_B c_2}}, \forall z \in [z_B, z_C].$$

Le deuxième brin de l'élément rayonnant est ensuite généré par symétrie d'axe x.

Les caractéristiques de l'antenne peuvent être modifiées en ajustant les paramètres physiques de l'élément rayonnant :

- la largeur de l'antenne (W),

- la hauteur de l'antenne (H),

- la profondeur de l'antenne (D),

- le grand rayon de la grande ellipse ($R_1$),

- le petit rayon de la grande ellipse / grand rayon de la petite ellipse ($R_2$),

- le petit rayon de la petite ellipse ($R_3$),

- la position de la jonction du brin avec l'alimentation (A),

- la position de la jonction entre les courbes (B),

- la position de l'extrémité du brin (C),

- le paramètre de courbure de la première courbe ($c_1$),

- le paramètre de courbure de la deuxième courbe ($c_2$).

L'optimisation de l'antenne consiste tout d'abord à obtenir un élément rayonnant dont les caractéristiques radioélectriques telles que le rayonnement caractérisable par son gain pic ou l'adaptation d'impédance soient stables et varient de manière monotone avec la fréquence, dans un encombrement défini par rapport au type de géométrie de réseau envisagée, tout en tenant compte de la structure porteuse. Cela se caractérise par une variation de gain dans la bande de fréquence ciblée. Cette optimisation maximisant le gain pic peut se faire par exemple en fixant la largeur et la hauteur de l'antenne, puis en affinant les autres paramètres en fonction de leur impact sur le diagramme de rayonnement ou l'adaptation d'impédance sur toute la bande de fréquence cible, par exemple à partir de simulations. Durant l'optimisation du réseau d'antennes, une homothétie sur l'ensemble des paramètres peut être réalisée sur l'élément rayonnant obtenu afin d'atteindre le gain cible de la bande de fréquence et ainsi de minimiser ses dimensions pour l'adapter à la géométrie de réseau souhaitée sans revenir sur cette étape initiale.

Il est ainsi possible de concevoir une antenne adressant n'importe quelle gamme de fréquences, dont la largeur de bande utile et les données de rayonnement sont ajustables. Cette technologie d'élément rayonnant permet d'aboutir à une antenne élémentaire à la fois :

- ultra large bande : son adaptation d'impédance et son gain permettent de couvrir un domaine fréquentiel supérieur à une décade en apportant les performances radioélectriques requises à ce type de système ;

- compacte : la forme repliée permet d'exploiter au maximum le volume occupé par rapport à des solutions planaires ou imprimées sur des substrats tout en arborant un faible profil (de l'ordre de la fraction d'une longueur d'onde). Cela garantit un meilleur compromis entre la compacité du réseau et la sensibilité du capteur. Cela permet également d'avoir des géométries de réseaux avec des éléments rayonnants plus proches des autres pour améliorer la protection aux ambiguïtés sans dégrader la portée d'interception des émetteurs ciblés ;

- sectorielle : la forme de l'antenne, rappelant celle d'une antenne « Vivaldi » (en anglais *Tapered Slot Antenna)* s'appuyant sur un plan de masse, permet d'obtenir un rayonnement sectoriel avec une ouverture du lobe de rayonnement à mi-puissance supérieure à 90° dans les deux plans. Cela permet en outre d'appuyer l'élément rayonnant directement sur le plan de masse sans dégrader la réponse du réseau. Cela permet enfin de concevoir des réseaux d'antennes exploitant la diversité en amplitude, en utilisant des antennes sectorielles orientées de manière différente. On peut ainsi obtenir un réseau omnidirectionnel en gain.

Sont également connus de l'homme du métier des processus d'optimisation de la position des antennes dans un réseau d'antennes, comme par exemple l'article de Jean-Marie Le Floch et al. : « ICEM-CE modelling view project ». Le brevet EP 2.462.459 B1 décrit un processus d'optimisation dans le cas d'un réseau constitué d'antennes identiques ayant toutes la même orientation. L'optimisation consiste alors à determiner la position des antennes permettant de respecter un cahier des charges en terme de précision mono-source, directivité et/ou résolution bi-sources. On cherche alors dans une famille de réseaux ayant les mêmes performances, ceux ayant la meilleure robustesse aux ambiguïtés. Ce procédé d'optimisation de réseau homogène s'appuie sur les outils de performances théoriques décrits dans l'article de Anne Ferreol et Pascal Chevalier : « High Resolution Direction Finding : From Performance to Antenna Array Optimization - The mono-source case », EUSIPCO, Aug 2009, Glasgow, United Kingdom, permettant de relier les positions des antennes d'un réseau à une performance provenant d'un cahier des charges.

La demande de brevet EP 2.458.398 A2 est une généralisation de l'optimisation d'un réseau homogène en mono-polarisation au cas des réseaux à diversité de polarisation composés d'un ensemble d'antennes identiques ayant des orientations différentes. Le lien analytique entre les performances et les couples (position, orientation) des antennes a été établi grâce à la modélisation de la figure 2 en composante électrique $E = (E_x, E_y, E_z)$ et magnétique $H = (M_x, M_y, M_z)$ de l'antenne élémentaire. Il est ainsi possible, sous une contrainte d'omnidirectionnalité en direction d'arrivée et en polarisation, de trouver les réseaux les plus robustes aux ambiguïtés. Le procédé a été développé plus particulièrement dans le cas d'une structure porteuse de type cylindrique. Ces réseaux hétérogènes en orientation ont l'avantage de s'affranchir de la polarisation des émetteurs, sachant que dans le réseau il y aura toujours des antennes suffisamment adaptées à la polarisation des ondes électromagnétiques incidentes. Cela permet d'obtenir un gain réseau suffisant quelle que soit la polarisation.

Le principal inconvénient de l'état de l'art est que l'optimisation de l'antenne est effectuée séparément de l'optimisation du réseau. En particulier, plus le gain spécifié dans un cahier des charges sera grand pour une bande particulière, plus cela aura pour effet de produire de grosses antennes ayant une taille largement supérieur à $\lambda/2$ (demi longueur d'onde), et par conséquent un gain présentant un important feuilletage dans le lobe principal, le feuilletage étant le taux de déformations du lobe principal de rayonnement, déformations qui s'accompagnent de l'apparition de lobes secondaires. D'autre part les processus d'optimisation minimisant les ambiguïtés nécessitent que certaines antennes du réseau soient les plus proches possibles pour lever les ambiguïtés de goniométrie. En particulier, dans le cas le plus défavorable de réseaux réguliers, cet espacement ne doit pas dépasser $\lambda/2$. Sachant que les processus d'optimisation de réseaux tiennent compte de l'encombrement des antennes, une grosse antenne à fort gain aura pour conséquence de donner au mieux des réseaux peu robustes aux ambiguïtés.

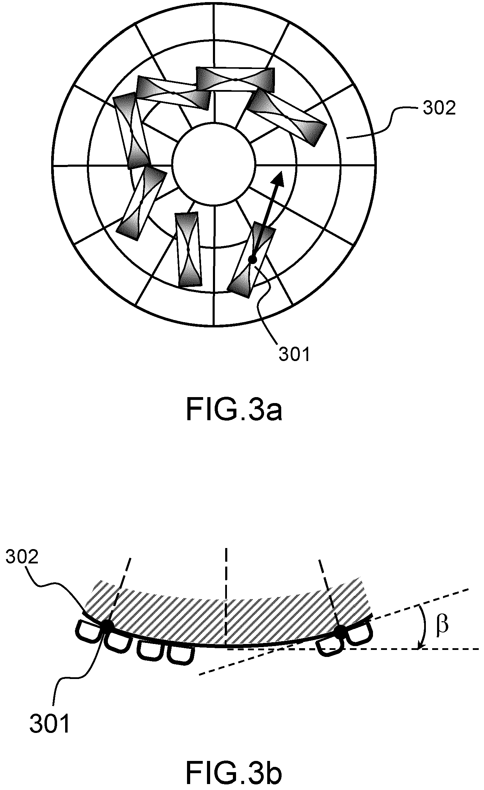

Un autre inconvénient de l'état de l'art provient de l'isolation du réseau d'antennes avec la plateforme. Cette isolation se fait à l'aide d'un plan de masse disposée entre le réseau et la plateforme, comme représenté sur la figure 3a, qui représente une vue d'un réseau d'antenne dans le plan horizontal, et où l'on on peut voir le cas d'un réseau d'antennes composé de sept antennes 301 disposées sur un plan de masse circulaire 302. Chaque antenne a une position et une orientation propre. Ce principe a été envisagé dans de nombreuses applications, en particulier pour des porteurs aéroportés. En particulier en présence d'une plate-forme de type drone à voilure tournante, la présence de la surface métallique est importante pour que les pales d'hélices ne génèrent pas de la diffraction et n'altèrent pas la réponse des antennes du réseau.

Disposer un réseau d'antennes sur un plan de masse présente toutefois des inconvénients pour des applications de goniométrie où les émetteurs ont des directions dans le plan du réseau. En effet, le gain total des antennes s'atténue fortement lorsque les sources proviennent d'une direction rasante par rapport au plan de masse. De même, indépendamment du gain, la précision en élévation d'un réseau plan est très médiocre pour des sources arrivant dans le plan des antennes. Cela a pour conséquence de très fortement dégrader la précision en distance d'un émetteur lorsque l'on applique une technique de géolocalisation instantanée à partir d'une goniométrie 2D, en particulier en contexte aéroporté. En d'autres termes, un réseau plan limite fortement le secteur angulaire couvert par le système de goniométrie : le problème est à la fois en gain et précision en élévation pour les sources arrivant dans le plan de ce plan de masse. Dans le but d'obtenir un réseau d'antenne ayant un diagramme de rayonnement omnidirectionnel en azimut et en élévation, il est donc avantageux de disposer le réseau d'antenne sur une surface métallique non plane, par exemple une portion de sphère métallique. La figure 3b représente le réseau d'antennes de la figure 3a dans le plan vertical. Les antennes 301 sont disposées sur une calotte sphérique métallique 302 ayant un angle de courbure $\beta$.

Pour ce qui est de la disposition et de la position des antennes, sachant qu'un objectif est d'établir un réseau permettant d'effectuer une goniométrie 2D en diversité de polarisation, le procédé d'optimisation d'un réseau hétérogène en orientation décrit dans la demande de brevet EP 2.458.398 A2 semble être une bonne solution. Toutefois ce procédé ne tient pas compte de la modélisation du gain total, qui correspond au gain de l'antenne lorsque l'onde incidente est adaptée à sa polarisation. En présence d'un plan de masse (ou surface métallique) ce gain a pour effet d'être déformé par rapport à une situation où l'antenne est modélisée seule en espace libre. Pour la conception d'un réseau installé sur un plan (ou surface ) de masse isolant le réseau de la plateforme, il est donc nécessaire de modéliser le gain total de l'antenne élémentaire.

Il faut noter également qu'en présence d'un réseau avec des antennes ayant la même orientation manière sur un petit plan de masse, il y a des pertes par désadaptation de la polarisation des antennes du réseau à l'état de polarisation des ondes incidentes. En d'autres termes, un réseau homogène réduit la plage de polarisation des ondes électromagnétiques incidentes couvertes par le système de goniométrie. Pour les sources n'ayant pas une polarisation adaptée, cela se traduit par une perte de gain et une maîtrise de la réponse du réseau fortement dégradée.

Par ailleurs, la modélisation des antennes donnée dans la demande de brevet EP 2.458.398 A2 est limitée à l'estimation des composantes électromagnétiques de l'antenne (composantes des champs électrique et magnétique) à partir d'une simulation de l'antenne en espace libre. Le modèle ne tient pas compte de la déformation du gain total lorsque l'antenne est en présence d'un plan de masse. En effet, dans un plan tangent à la structure métallique, le gain total d'une antenne a généralement tendance à fortement s'affaiblir par rapport à la même antenne en espace libre. Tout cela ne permet pas de prendre en compte l'effet de la surface sur un réseau qui lui est conforme, et qui a l'avantage d'accentuer la diversité en amplitude du réseau, et donc d'améliorer les performances de goniométrie de sources arrivant dans le plan horizontal. Sans la modélisation du gain total, on ne peut donc pas déterminer dans de bonnes conditions une solution de réseau optimal avec des antennes conformes à une surface, telle qu'une calotte sphérique ou un cylindre.

Un but de l'invention est donc de décrire un procédé permettant de déterminer le meilleur couple antenne élémentaire/réseau d'antennes optimisant le compromis entre le gain d'une antenne dans une bande en fréquence large et la robustesse aux ambiguïtés du réseau.

Un autre but de l'invention est que le procédé tienne compte de la modélisation du gain total des antennes, en particulier de l'influence d'un plan de masse ou surface métallique situé sous le réseau d'antennes.

**Résumé de l'invention** :

A cet effet, la présente invention décrit un procédé de conception d'un réseau de N antennes disposées sur une surface métallique destinée à isoler le réseau d'antennes de son support, avec N supérieur à 1. Le réseau d'antennes vise à être sensiblement omnidirectionnel en direction d'arrivée et en polarisation dans une bande de fréquences ayant une fréquence minimum $f_{min}$ et une fréquence maximum $f_{max}$. Le procédé de conception selon l'invention comprend les étapes suivantes :

- une première étape de détermination de K configurations d'antenne ayant des caractéristiques géométriques différentes, avec K supérieur à 1, adaptées pour satisfaire une contrainte de différentiel de gain sur la bande de fréquences $[f_{min}, f_{max}]$ et une contrainte de variation de gain dans le lobe principal de l'antenne,

- une deuxième étape de calcul, pour chacune des K configurations d'antenne, d'au moins une configuration de réseau d'antennes, les orientations des N antennes de chaque configuration de réseau d'antennes étant choisies de manière à favoriser l'omnidirectionnalité du réseau d'antennes en polarisation, les dispositions des N antennes de chaque configuration de réseau d'antennes étant choisies de manière à favoriser l'omnidirectionnalité du réseau d'antennes en direction d'arrivée,

- une troisième étape de sélection du ou des meilleurs couples configuration d'antenne/configuration de réseau d'antennes.

Avantageusement, les antennes sont des antennes de type « pétale », comprenant deux brins repliés vers un plan de masse au centre de l'antenne.

Dans un mode de réalisation, le procédé de conception d'un réseau d'antennes selon l'invention comprend en outre une quatrième étape d'optimisation de la configuration de la ou des antennes sélectionnées lors de la troisième étape, de manière à optimiser les performances du ou des réseaux d'antennes associés.

Lorsque les antennes sont des antennes de type « pétale », ladite optimisation de la configuration peut comprendre la modification d'un paramètre de configuration des antennes parmi : une largeur, une forme des brins et un rayon de courbure des brins.

Selon un mode de réalisation du procédé selon l'invention, les N antennes sont identiques.

Selon un mode de réalisation du procédé selon l'invention, la première étape et la deuxième étape sont mises en œuvre à partir d'une simulation électromagnétique ou d'une mesure du gain complexe d'une antenne unitaire disposée sur ladite surface métallique.

Avantageusement, la surface métallique est une portion de sphère métallique.

Selon un mode de réalisation du procédé selon l'invention, la première étape comprend la détermination de K' configurations d'antenne ayant des caractéristiques géométriques différentes, avec K' supérieur à K, adaptées pour satisfaire une contrainte de limitation du taux de feuilletage à la fréquence $f_{max}$, puis pour chaque configuration d'antenne, la détermination d'une bande de fréquences $[f_{min}, f_{max}]$ répondant à une contrainte de variation du gain pic dans la bande de fréquences, puis la sélection de K configurations d'antenne parmi lesdites K' configurations d'antenne, en considérant la longueur de chaque antenne et la fréquence minimum $f_{min}$ associée.

Selon un mode de réalisation du procédé selon l'invention, la deuxième étape comprend :

- l'obtention de gains complexes $G_V(\Theta, f)$ et $G_H(\Theta, f)$ de réponses de l'antenne unitaire aux polarisations $E_\theta$ et $E_\varphi$ suivant des directions d'arrivées $\Theta = \{\theta, \Delta\}$ pour une maille régulière de fréquences comprises dans la bande de fréquences $[f_{min}, f_{max}]$ ;

- pour ladite maille régulière de fréquences f, le calcul de paramètres de modélisation du gain d'antenne, en estimant des composantes électromagnétiques **em**(f) et des coefficients d'interpolation **w**(f) du gain total de l'antenne à partir des gains complexes $G_V(\Theta, f)$ et $G_H(\Theta, f)$ ;

puis pour un nombre donné d'itérations :

- la détermination d'orientations ($\mathbf{d}_1, \ldots \mathbf{d}_N$) des antennes favorisant l'omnidirectionnalité du réseau d'antennes en polarisation ;

- la détermination de positions ($\mathbf{p}_1 \ldots \mathbf{p}_N$) des antennes favorisant l'omnidirectionnalité du réseau d'antennes en direction d'arrivée ;

- le rejet du réseau d'antennes lorsque les positions et orientations des antennes ne sont pas compatibles avec un encombrement maximum du réseau d'antennes ;

et dans lequel la troisième étape comprend, pour chaque couple configuration d'antenne/configuration de réseau d'antennes :

- pour une maille régulière de fréquences comprises dans la bande de fréquences $[f_{min}, f_{max}]$, le calcul à chaque fréquence f d'une robustesse aux ambiguïtés du couple configuration d'antenne/configuration de réseau d'antennes en effectuant :

  o à partir des paramètres {**w**(f), **em**(f)} de l'antenne, de la longueur d'onde $\lambda = c/f$, des orientations des antennes {$\mathbf{d}_n$} et de leurs positions {$\mathbf{p}_n$}, le calcul des réponses $a_n(O, \mathbf{P}_V)$ et $a_n(O, \mathbf{P}_H)$ des N antennes pour la polarisation $\mathbf{P}_V = [1 \ 0]^T$ et $\mathbf{P}_H = [0 \ 1]^T$ pour obtenir des vecteurs $\mathbf{a}(O, \mathbf{P}_V)$ et $\mathbf{a}(O, \mathbf{P}_H)$ ;

  o pour chaque direction $\Theta$ à la fréquence f, l'orthonormalisation de la base de vecteurs $\mathbf{a}(O, \mathbf{P}_V)$ et $\mathbf{a}(O, \mathbf{P}_H)$ pour obtenir les colonnes de la matrice $\tilde{\mathbf{U}}(\Theta) = [\mathbf{a}^{co}(\Theta) \ \mathbf{a}^{cross}(\Theta)]$ ;

  o le calcul de la robustesse aux ambiguïtés $\eta_1(f)$ du couple configuration d'antenne/configuration de réseau d'antennes à partir de ladite matrice $\tilde{\mathbf{U}}(\Theta)$, la robustesse aux ambiguïtés correspondant à un minimum de la projection de deux plans formés respectivement par des colonnes de $\tilde{\mathbf{U}}(\Theta i)$ et de $\tilde{\mathbf{U}}(\Theta j)$ pour tout couple de directions différentes ($\Theta_i, \Theta_j$);

- le calcul de la robustesse aux ambiguïtés du couple configuration d'antenne/configuration de réseau d'antennes $\eta_{réseau} = \min_{f_{min} \leq f \leq f_{max}} \eta_1(f)$;

le ou les meilleurs couples configuration d'antenne/configuration de réseau d'antennes étant celui ou ceux dont la robustesse aux ambiguïtés $\eta_{réseau}$ est la plus élevée.

Selon un mode de réalisation du procédé selon l'invention, le choix des orientations des N antennes de la deuxième étape comprend :

- le tirage aléatoire de N-1 valeurs $x_2$ à $x_N$, avec $x_1 = 1$,

- la construction d'un vecteur $\tilde{\mathbf{b}}(\alpha) = \mathbf{b}(\varphi = \{\varphi_1 = \cdots \varphi_N = x_N \alpha\})$, avec $\boldsymbol{b}(\varphi) = \boldsymbol{c}(\varphi) + j\boldsymbol{s}(\varphi)$, $\boldsymbol{c}(\boldsymbol{\varphi}) = \begin{bmatrix} \cos(\varphi_1) \\ \ldots \\ \cos(\varphi_N) \end{bmatrix}$ et

$$\boldsymbol{s}(\boldsymbol{\varphi}) = \begin{bmatrix} sin(\varphi_1) \\ \ldots \\ sin(\varphi_N) \end{bmatrix},$$

- le calcul d'un angle $\alpha_{min}$ minimisant un critère d'orthogonalité $C_\varphi(\alpha) = \tilde{\boldsymbol{b}}^T(\alpha)\tilde{\boldsymbol{b}}(\alpha)$,
- le calcul de phases de directions $\{\varphi_1 = x_1\alpha_{min} \cdots \varphi_N = x_N\alpha_{min}\}$ des N antennes ;

- le calcul d'orientations ($\mathbf{d}_1,... \mathbf{d}_N$) à partir des phases de direction $\varphi_n$ des N antennes.

Selon un mode de réalisation du procédé selon l'invention, le choix de la position des N antennes de la deuxième étape comprend les étapes de :

- tirage aléatoire de N positions d'antennes $\mathbf{p}_n^0 = [x_n \ y_n]^T$ dans un plan horizontal,

- calcul d'une matrice $\widetilde{D}_{pp}^{g\acute{e}o}$ d'ouverture équivalente du réseau d'antennes, avec

$$\tilde{\mathbf{D}}_{pp}^{geo} = \sum_{n=1}^{N} \left(\mathbf{p}_n^0 - \overline{\mathbf{p}}\right)\left(\mathbf{p}_n^0 - \overline{\mathbf{p}}\right)^T / N \text{ , et } \overline{\mathbf{p}} = \sum_{n=1}^{N} \mathbf{p}_n^0 / N \text{ ,}$$

- décomposition de la matrice $\widetilde{D}_{pp}^{g\acute{e}o}$ en éléments propres, avec $\tilde{\mathbf{D}}_{pp}^{geo} = \mathbf{E}\Lambda\mathbf{E}^H$, où $\mathbf{E}$ est une matrice des vecteurs propres de $\widetilde{D}_{pp}^{g\acute{e}o}$ et $\Lambda$ une matrice diagonale des valeurs propres de $\widetilde{D}_{pp}^{g\acute{e}o}$,
- calcul d'une matrice $\mathbf{W}$ de blanchiment, avec $\mathbf{W}=\mathbf{E}\Lambda^{1/2}$,
- calcul d'un jeu de positions d'antennes $\mathbf{p}_n^1 = \mathbf{W}^{-1}(\mathbf{p}_n^0 - \overline{\mathbf{p}})$,
- calcul d'un encombrement du réseau $\mathbf{p}_n^1$,
- redimensionnement du réseau $\mathbf{p}_n^1$ par l'application d'un rapport homothétique entre un encombrement associé aux positions $\{\mathbf{p}_n^1,\}$ et un encombrement maximum spécifié.

Dans un mode de réalisation du procédé selon l'invention dans lequel la surface métallique est non plane, le choix de la position des N antennes et/ou de l'orientation des N antennes de la deuxième étape comprend en outre une étape de projection des positions et/ou orientations sur la surface métallique.

**Brève description des figures :**

L'invention sera mieux comprise et d'autres caractéristiques, détails et avantages apparaîtront mieux à la lecture de la description qui suit, donnée à titre non limitatif, et grâce aux figures annexées, données à titre d'exemple, parmi lesquelles :

- la figure 1a schématise une vie en trois dimensions d'une antenne pétale, utilisée pour illustrer la mise en œuvre du procédé selon l'invention ;

- la figure 1b représente une des pétales de l'antenne pétale de la figure 1a en vue de face ;

- la figure 1c représente une vue de profil de l'antenne pétale de la figure 1a ;

- la figure 2 est une représentation avec un schéma équivalent du modèle d'une antenne, dans un cas général ;

- la figure 3a représente une vue d'un réseau d'antennes dans un plan horizontal, à titre d'illustration ;

- la figure 3b représente une vue du réseau d'antennes de la figure 3adans un plan vertical, à titre d'illustration ;

- la figure 4a est une représentation de la polarisation $P_0$ d'une onde transmise entre un émetteur et un réseau d'antennes ;

- la figure 4b est une représentation du plan d'onde, du vecteur d'onde et de la polarisation associés à la propagation d'une onde en polarisation V ;

- la figure 4c est une représentation du plan d'onde, du vecteur d'onde et de la polarisation associés à la propagation d'une onde en polarisation H ;

- la figure 5 représente une application pratique d'un réseau d'antennes pétales ;

- la figure 6 représente schématiquement les étapes d'un procédé de conception d'un réseau de N antennes selon un mode de réalisation de l'invention ;

- la figure 7a est une illustration d'une antenne pétale positionnée dans un repère orthonormé (x', y', z') ;

- la figure 7b est une illustration d'un changement de repère lié à une variation de l'orientation de l'antenne pétale de la figure 7a ;

- la figure 8a est une illustration du gain d'un dipôle parfait en fonction de son orientation ;

- la figure 8b est une illustration du gain d'une boucle parfaite en fonction de son orientation ;

- la figure 9 est une illustration d'un réseau homogène d'antennes positionnées sur un plan.

Des références identiques peuvent être utilisées dans des figures différentes lorsqu'elles désignent des éléments identiques ou comparables.

**Description détaillée** :

Un objectif de l'invention décrite ci-après est de concevoir un réseau d'antennes omnidirectionnel en direction d'arrivée (gisement $\theta$ et élévation $\Delta$) et en polarisation. Le procédé de conception du réseau proposée optimise conjointement le couple (antenne, réseau).

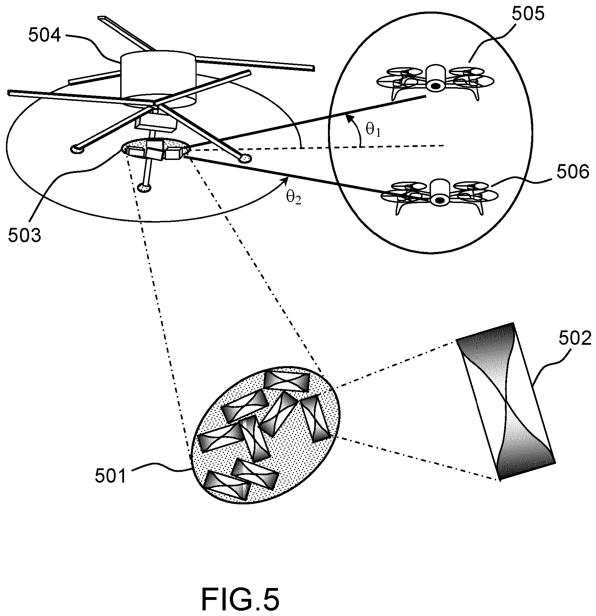

La figure 5 représente une application pratique d'un réseau d'antennes. Dans cet exemple, le réseau d'antennes 501 est composé de 8 antennes de type pétale 502. Le réseau d'antennes est positionné sur un disque métallique 503 ayant pour objet d'isoler le réseau d'antennes du porteur 504 sur lequel il est disposé, dans l'exemple un drone. Le réseau d'antennes selon l'invention permet de mettre en œuvre des fonctions de goniométrie afin de déterminer la direction d'arrivée en deux dimensions d'ondes électromagnétiques transmises par d'autres équipements 505 et 506.

De manière à obtenir un réseau permettant d'avoir suffisamment de gain et de précision dans un secteur angulaire 2D suffisamment large, la suite de la description porte sur l'optimisation d'un réseau d'antennes identiques avec des orientations différentes, conforme à une surface 3D de type calotte sphérique métallique. Cependant, l'invention s'applique de manière identique lorsque le réseau d'antennes est disposé sur une surface métallique quelconque d'équation $z = f(x, y)$.

Afin de simplifier l'optimisation du réseau, les propriétés d'omnidirectionnalité en direction d'arrivée et en polarisation seront à minima vérifiées pour le réseau projeté dans le plan horizontal (x, y). L'axe z vertical pourra être vu comme un axe de déformation d'un plan de masse horizontal. Dans le cas d'une calotte sphérique, la fonction de déformation est très simple, avec $f(x, y) = \sqrt{R^2 - x^2 - y^2}$ .

Le procédé décrit généralise donc l'optimisation du réseau d'antennes à une surface quelconque, contrairement à l'état de l'art, par exemple le brevet EP 2.462.459 B1, où l'optimisation n'est mise en œuvre que pour une surface cylindrique d'équation $z = f(x, y) = \sqrt{R^2 - y^2}$ .

La suite de la description décrit dans un premier temps des principes de goniométrie nécessaires pour comprendre la mise en œuvre du procédé selon l'invention et obtenir les performances souhaitées. En termes de notations mathématiques, un terme en gras désigne un vecteur, un terme en majuscules désigne une matrice, l'opérateur ~ et l'opérateur ~ désignent une estimée, l'opérateur $^T$ représente le transposé conjugué, l'opérateur $^H$ représente le transposé conjugué, l'opérateur ⁻ désigne une moyenne.

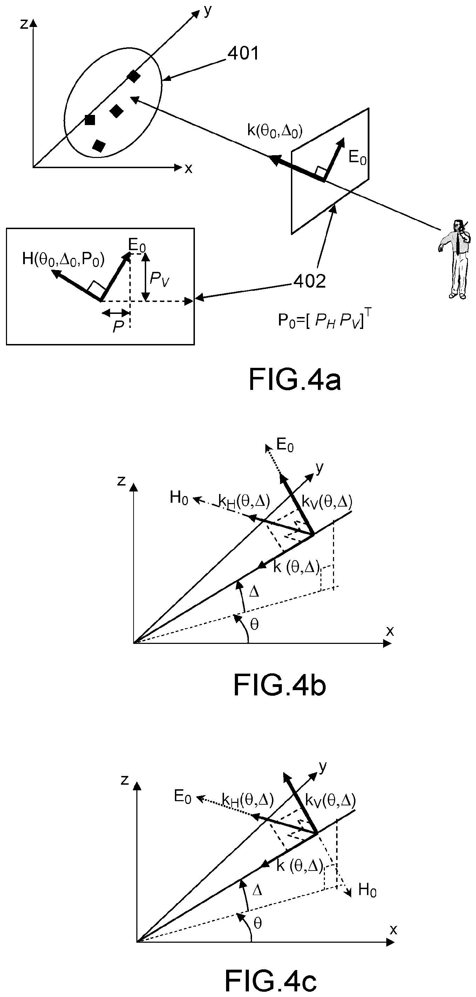

La figure 4a est une représentation de la polarisation $P_0$ d'une onde transmise entre un émetteur et un réseau d'antennes. La référence 401 désigne un réseau d'antennes hétérogène par leurs orientations. On dit d'un réseau d'antenne qu'il est homogène lorsque tous les capteurs du réseau sont des éléments rayonnant identiques ayant la même orientation dans l'espace, et hétérogène sinon. On peut donc avoir un réseau hétérogène comprenant N capteurs différents, ou N capteurs identiques ayant des orientations différentes.

D'un point de vue général, toute onde se propage avec une polarisation **P** (projection du vecteur champ électrique **E** dans le plan d'onde 402) donnée, qui est la combinaison linéaire de la polarisation V où $E=k_V$ et de la polarisation **H** où $E=k_H$. L'onde se propage avec une composante magnétique **H** qui est perpendiculaire au champ électrique **E.** Les composantes électriques et magnétiques sont incluses dans le plan d'onde 402, perpendiculaire au vecteur d'onde **k**$(\theta, \Delta)$, avec $\theta$ l'azimut et $\Delta$ l'élévation dans le plan xyz du réseau d'antenne. On note par $\mathbf{b_V}$ et $\mathbf{b_H}$ les composantes magnétiques des polarisations V et H.

Les figures 4b et 4c représentent le plan d'onde, le vecteur d'onde et la polarisation associés à la propagation d'une onde polarisée respectivement en polarisation V et en polarisation H, dans le plan d'onde défini par les vecteurs orthonormés $k_V(\theta, \Delta)$ et $k_H(\theta, \Delta)$. Ces figures montrent la position du champ électrique incident $E_0$ et du champ magnétique incident $H_0$ en fonction de la polarisation de l'onde.

En présence de M sources, le signal en sortie d'un réseau de N capteurs s'écrit :

$$\mathbf{x}(t) = \begin{bmatrix} x_1(t) \\ \vdots \\ x_N(t) \end{bmatrix} = \sum_{m=1}^{M} \tilde{\mathbf{a}}(\Theta_m, \mathbf{P}_m) \, \mathrm{s}_m(t) + \mathbf{n}(t) \qquad (1)$$

où $x_n(t)$ est le signal reçu sur le n-ième capteur, $s_m(t)$ est le signal de la m-ième source, n(t) est le bruit additif, $\Theta_m$ est la direction d'arrivée de la source, $\mathbf{P}_m$ est la polarisation telle que définie aux figures 4b et 4c, et $\tilde{\mathbf{a}}(\Theta_m, \mathbf{P}_m)$ est le vecteur directeur observé. En présence d'erreur de modèle le vecteur $\tilde{\mathbf{a}}(\Theta_m, \mathbf{P}_m)$ s'écrit :

$$\tilde{\mathbf{a}}(\Theta_m, \mathbf{P}_m) = \mathbf{a}(\Theta_m, \mathbf{P}_m) + \mathbf{e}_m \qquad (2)$$

où $\mathbf{a}(\Theta_m, \mathbf{P}_m)$ est le vecteur directeur théorique tel que $\mathbf{a}(\Theta_m, \mathbf{P}_m)^H \mathbf{a}(\Theta_m, \mathbf{P}_m) = N$ et $\mathbf{e}_m$ est l'erreur de modèle.

En supposant qu'il n'y a pas de couplage mutuel, et selon la figure 4a, la n-ième composante de $\mathbf{a}(\Theta_m, \mathbf{P}_m)$ s'écrit :

$$a_n(\Theta, \mathbf{P}) = G_n(\Theta, \mathbf{P}) \exp\left(j \frac{2\pi}{\lambda} \mathbf{k}(\Theta)^T \mathbf{p_n}\right) \qquad (3)$$

où $\mathbf{p}_n = [x_n \, y_n \, z_n]^T$ est le vecteur de position, $\lambda$ est la longueur d'onde et $\mathbf{k}(\Theta)$ est le vecteur d'onde tel que :

$$\mathbf{k}(\Theta) = \begin{bmatrix} u \\ v \\ w \end{bmatrix} \text{ avec } \begin{cases} u = \cos(\theta)\cos(\Delta) \\ v = \sin(\theta)\cos(\Delta) \\ w = \sin(\Delta) \end{cases} \qquad (4)$$

où $\Theta = \{\theta, \Delta\}$ dépend de l'azimut $\theta$ et de l'élévation $\Delta$. Un réseau est dit hétérogène lorsque les gains des antennes $G_m(\Theta, \mathbf{P})$ ne sont pas identiques. Sans nuire à aucune généralité le vecteur directeur $\mathbf{a}(\Theta, \mathbf{P})$ s'écrit de la manière suivante :

$$\mathbf{a}(\Theta, \mathbf{P}) = \mathbf{U}(\Theta)\mathbf{P} \qquad (5)$$

Sachant que la matrice $\mathbf{U}(\Theta)$ de dimension Nx2 dépend de l'incidence $\Theta$ de la source, ainsi que des positions et orientations des éléments rayonnants composant le réseau, la première colonne de $\mathbf{U}(\Theta)$ peut par exemple être associée à la réponse du réseau à la polarisation H, de sorte que P(1) = $E_\theta$ et la deuxième colonne à la polarisation V, de sorte que $\mathbf{P}$(2) = $E_\varphi$. Les propriétés algébriques de cette matrice conditionnent complétement les performances du réseau.

L'optimisation de réseau d'antenne se fera sur la base des performances mono-source (*M* = 1) avec :

- le critère de robustesse aux ambiguïtés,

- la précision de goniométrie.

Une ambiguïté mathématique en présence d'une source est présente lorsque, pour une source de direction $\Theta_1$ et de polarisation $\mathbf{P}_1$, il existe un autre couple direction/polarisation $(\Theta_2, \mathbf{P}_2)$ tel que les vecteurs $\mathbf{a}(\Theta_1, \mathbf{P}_1)$ et $\mathbf{a}(\Theta_2, \mathbf{P}_2)$ soient colinéaires. Dans ces conditions le critère suivant est nul :

$$J(\Theta_1, \Theta_2, \mathbf{P}_1, \mathbf{P}_2) = 1 - \frac{|\mathbf{a}^H(\Theta_1, \mathbf{P}_1)\mathbf{a}^H(\Theta_2, \mathbf{P}_2)|^2}{\|\mathbf{a}^H(\Theta_1, \mathbf{P}_1)\|^2 \|\mathbf{a}^H(\Theta_2, \mathbf{P}_2)\|^2} \qquad (6)$$

C'est ainsi que la robustesse aux ambiguïtés en mono-source est la valeur suivante :

$$\eta_1 = \min_{(\mathbf{P}_1, \mathbf{P}_2)} J(\Theta_1, \Theta_2, \mathbf{P}_1, \mathbf{P}_2). \tag{7}$$

En considérant la décomposition canonique suivante de la matrice $\mathbf{U}(\Theta)$ :

$$\mathbf{U}(\boldsymbol{\Theta}) = [\mathbf{a}^{co}(\Theta)P_{co} \quad \mathbf{a}^{cross}(\Theta)P_{cross}]\mathbf{P}_{assage} \tag{8}$$

où les vecteurs $\mathbf{a}^{co}(\Theta)$ et $\mathbf{a}^{cross}(\Theta)$ sont les réponses orthonormées en co-polarisation et en cross-polarisation (polarisation croisée) du réseau formant une base orthonormée et $P_{co}$ et $P_{cross}$ sont des scalaires indiquant le caractère à diversité de polarisation du réseau, on peut montrer que :

$$\min_{(\mathbf{P}_1, \mathbf{P}_2)} J(\Theta_1, \Theta_2, \mathbf{P}_1, \mathbf{P}_2) = 1 - \left( \lambda_{max} \left( \widetilde{\mathbf{U}}^H(\Theta_1)\widetilde{\mathbf{U}}(\Theta_2) \right) \right)^2 \tag{9}$$

$$\text{avec } \widetilde{\mathbf{U}}(\Theta) = [\mathbf{a}^{co}(\Theta) \quad \mathbf{a}^{cross}(\Theta)]$$

où $\lambda_{max}(\mathbf{M})$ est la valeur singulière maximale de $\mathbf{M}$. Il faut d'autre part noter qu'un réseau mono-polarisation est tel que $P_{cross}$ est nulle. $P_{co}$ est alors la polarisation du réseau. Dans tous les autres cas, on a un réseau à diversité de polarisation. Dans le cas particulier où les normes des vecteurs $P_{cross}$ et $P_{co}$ sont égales on est alors dans le cas d'un réseau omnidirectionnel en polarisation. D'après la dernière expression, la robustesse aux ambiguïtés en mono-source est :

$$\eta_1(f) = 1 - \min_{(\Theta_1 \neq \Theta_2)} \left( \lambda_{max} \left( \widetilde{\mathbf{U}}^H(\Theta_1)\widetilde{\mathbf{U}}(\Theta_2) \right) \right)^2 \tag{10}$$

où $f = c/\lambda$ est la fréquence porteuse et c la célérité de la lumière. La robustesse aux ambiguïtés $\eta_{réseau}$ d'un réseau d'antennes sera égale à la plus faible robustesse dans la bande utile en fréquence. Cette robustesse dépendra des positions et orientations des antennes dans le réseau.

Sachant que nous sommes en présence d'erreur de modèle $\mathbf{e}_m$ ou d'un bruit additif n(t), l'algorithme de goniométrie estime le couple incidence-polarisation ($\Psi_m = \Theta_m$ ou $\mathbf{k}(\Theta_m), \mathbf{P}_m$) de la source avec une erreur. On s'intéresse en particulier à la variance de l'estimation de l'incidence en mono-source :

$$MS_{\Psi_m} = E\left[ \Delta\Psi_m \Delta\Psi_m{}^T \right] \ avec \ \Delta\Psi_m = \widehat{\Psi}_m - \Psi_m \tag{11}$$

où $(\check{\Psi}_m, \check{\mathbf{P}}_m)$ est une estimé de $(\Psi_m, \mathbf{P}_m)$, et

$$\Psi_m = \begin{bmatrix} \boldsymbol{\Theta}_m \\ \mathbf{P}_m \end{bmatrix} = \begin{bmatrix} \vartheta_m \\ \Delta_m \\ \mathbf{P}_m \end{bmatrix}.$$

La racine de $MS_{\Psi m}[1][1]$ est la précision d'estimation du gisement $\theta_m$ et $MS_{\Psi m}[2][2]$ est la précision d'estimation de l'élévation $\Delta_m$. Dans la référence *« High Resolution direction finding : from performance toward antenna array optimization - The mono-source case »,* il est monté qu'en présence d'une source :

$$MS_{\Psi_1} = E\left[\Delta\Psi_1\Delta\Psi_1{}^T\right] = \alpha H(\Psi_1)^{-1}$$

$$H(\Psi_1) = 2\dot{A}^H \Pi(\Psi_1)\dot{A}$$

avec

$$\dot{A} = \left[\frac{\delta\mathbf{a}(\Psi_1, \mathbf{P})}{\delta\Psi_1(1)} \cdots \frac{\delta\mathbf{a}(\Psi_1, \mathbf{P})}{\delta\Psi_1(d)}\right] \qquad (12)$$

$$\Pi(\Psi_1) = \mathbf{I}_N - \frac{\mathbf{a}(\Psi_1, \mathbf{P})\mathbf{a}^H(\Psi_1, \mathbf{P})}{\mathbf{a}(\Psi_1, \mathbf{P})^H\mathbf{a}(\Psi_1, \mathbf{P})}$$

$\mathbf{I}_N$ étant la matrice identité de taille NxN.

D'après cet article et le tableau suivant, qui donne les paramètres à associer aux critères de précision monosource sachant $[\mathbf{n}(t)\mathbf{n}(t)^H] = \sigma^2 \mathbf{I_N}$, les valeurs du coefficient $\alpha$ dépendent du type de performances considérées.

[Table 1]

| Type de Performances | | Valeur du coefficient $\alpha$ |
|---|---|---|
| **Borne de Cramer RAO** <br><br> A partir de $\underline{\mathbf{x}(t_k)}$ pour $\underline{1 < k < \overline{K}}$ | *Cas Stochastique* | $\alpha = \dfrac{1 + \left(\frac{Nr_{ss}}{x^2}\right)^{-1}}{K\left(\frac{r_{ss}}{\sigma^2}\right)}$ avec $r_{ss} = E[\,|s_m(t_k)|^2]$ |
| | *Cas déterministe* | $\alpha = \dfrac{1}{K\left(\frac{\hat{r}_{ss}}{\sigma^2}\right)}$ avec $\hat{r}_{ss} = \dfrac{1}{K}\sum_{k=1}^{K}|s_m(t_k)|^2$ |
| *Performance de MUSIC* | *A temps d'intégration fini avec $\underline{\mathbf{x}(t_k)}$ pour $\underline{1 \leq k \leq K}$* | $\alpha = \dfrac{1}{K\left(\frac{r_{ss}}{\sigma^2}\right)}$ |
| | *En présence d'erreur de modèle* | $\alpha = \dfrac{E[\mathbf{e}_m{}^H\mathbf{e}_m]}{N}$ |

Cela montre que les performances dépendent uniquement de la matrice $\mathbf{H}()$, qui est en lien directe avec la largeur de lobe du critère de goniométrie. Selon les expressions suivantes, la matrice $MS_{\Theta 1}$ contient sur sa diagonale la variance d'estimation du gisement et de l'élévation et la matrice $MS_{\mathbf{k}(\Theta_1)}$ la variance d'estimation des composantes $(u_1, v_1, w_1)$ du vecteur d'onde :

$$MS_{\Theta_1} = \begin{bmatrix} E\left(|\theta_1 - \hat{\theta}_1|^2\right) & \\ & E\left(|\Delta_1 - \hat{\Delta}_1|^2\right) \end{bmatrix} \text{ et}$$

$$MS_{k(\Theta_1)} = \begin{bmatrix} E(|u_1 - \hat{u}_1|^2) & & \\ & E(|v_1 - \hat{v}_1|^2) & \\ & & E(|w_1 - \hat{w}_1|^2) \end{bmatrix} \qquad (13)$$

$$\mathbf{k}(\Theta_1) = \begin{bmatrix} u_1 = \cos(\theta_1)\cos(\Delta_1) \\ v_1 = \sin(\theta_1)\cos(\Delta_1) \\ w_1 = \sin(\Delta_1) \end{bmatrix}$$

L'état de l'art montre que cette matrice peut s'écrire relativement simplement. Cela donne des outils importants pour l'optimisation de réseau, car cela permet d'obtenir des conditions pour respecter l'omnidirectionalité en direction d'arrivée et en polarisation. En particulier on montre dans le cas d'un réseau mono-polarisation que la condition d'omnidirectionalité en direction d'arrivée dépend uniquement de la position des antennes dans le réseau. L'omnidirectionnalité en direction d'arrivée est obtenue lorsque la matrice $MS_{\Theta_1}$ est diagonale, et lorsque la matrice $MS_{k(\Theta_1)}$ est proportionnelle à l'identité.

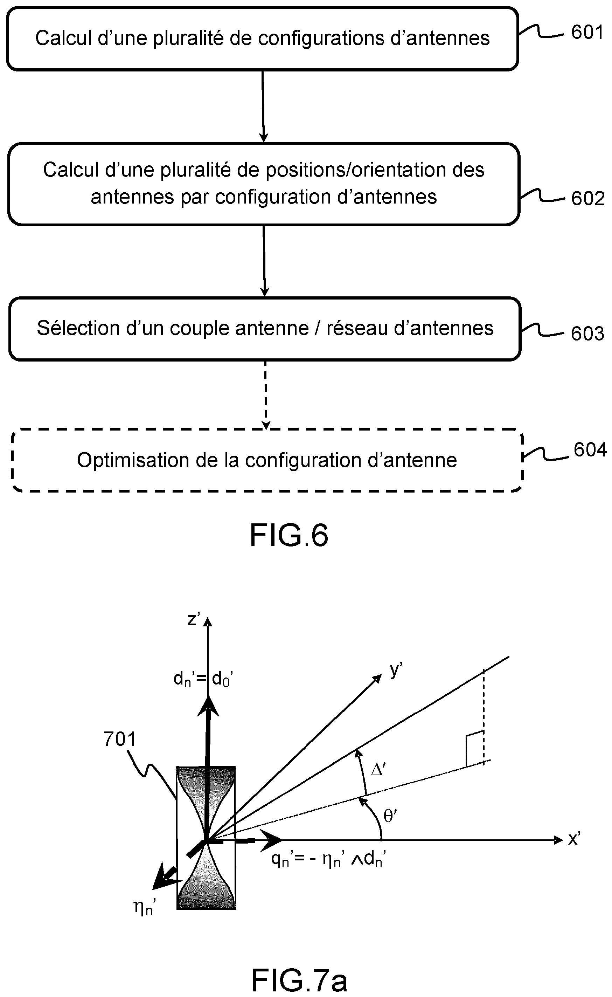

La figure 6 représente schématiquement les étapes d'un procédé de conception d'un réseau de N antennes selon un mode de réalisation de l'invention, pour la conception d'un réseau d'antennes visant à être omnidirectionnel en direction d'arrivée et en polarisation.

Sachant que la fréquence maximale de travail du goniomètre est $f_{max}$, le procédé selon l'invention comprend une première étape 601 qui consiste à optimiser tout d'abord les paramètres géométriques de l'antenne, afin de fournir à une étape ultérieure d'optimisation du réseau d'antennes un ensemble de K antennes élémentaires dont l'adaptation d'impédance et le gain sont compatibles par leur niveau d'une utilisation dans une bande de fréquences de travail [$f_{min}$, $f_{max}$] la plus large possible.

Cette étape se fait avantageusement par optimisations à l'aide de simulations électromagnétiques, les simulations pouvant exploiter des données de rayonnement mesurées, afin de caractériser la réponse de la collection de K antennes fonctionnant jusqu'à la fréquence $f_{max}$. Les K antennes retenues satisfont notamment une contrainte de limitation du feuilletage du gain total de l'antenne dans le lobe principal. La fréquence $f_{min}$ est déterminée par rapport à une contrainte de différentiel de gain du pic de lobe de l'antenne entre les fréquences $f_{min}$ et $f_{max}$. On appelle feuilletage de l'antenne les variations de gain observées dans le diagramme de rayonnement, caractéristiques de l'apparition de lobes secondaires ou d'altérations du lobe principal par couplage ou résonance. Ces variations (diminutions) créent des zones aveugles de l'antenne, et doivent donc être évitées. Pour cela, un taux de feuilletage est mesuré en simulations, qui correspond à l'écart entre les minimums et les maximums dans la zone du lobe principal du gain de l'antenne.

Dans un mode de réalisation où la longueur L de l'antenne est une variable d'ajustement de l'antenne, l'étape 601 peut être mise en œuvre en déterminant la fréquence $f_{max}$ vérifiant le taux de feuilletage maximum admissible, puis en redimensionnant l'antenne avec le rapport homothétique $f_{max0}/f_{max}$. La fréquence $f_{min}$ est déterminée suivant une contrainte d'écart maximal de gain pic entre les fréquences $f_{min}$ et $f_{max}$. L'optimisation consistera à minimiser le couple (taille de l'antenne, fréquence minimale $f_{min}$). Cette homothétie permet de converger rapidement vers une solution. Elle peut être suivie d'une étape d'ajustement fin des paramètres de l'antenne. Pour cela, l'utilisation de l'antenne « Pétale » du brevet Européen EP 3.335.277 B1 est particulièrement avantageuse compte tenu de l'ensemble des paramètres d'optimisation qu'elle offre.

Un mode de réalisation possible est le suivant :

- pour une longueur d'antenne L donnée, ajustement des autres paramètres de l'antenne pour fournir une configuration d'antenne ayant de bonnes caractéristiques radioélectriques, en particulier en termes de stabilité du gain et d'adaptation d'impédance sur une bande de fréquences majorée par $f_{max}$ ;

- calcul de la fréquence maximum $f_{max0}$ jusqu'à laquelle l'antenne satisfait un critère de maximum de feuilletage, avec $f_{max0} \leq f_{max}$ ;

- calcul de la fréquence minimum $f_{min0}$ en fonction d'un critère de variation de gain maximum sur la bande de fréquences [$f_{min0}$, $f_{max0}$], de sorte que le pic de gain à la fréquence $f_{max0}$ et le pic de gain à la fréquence $f_{min0}$ aient un écart inférieur à un seuil $\Delta G$ ;

- redimensionnement de l'antenne par homothétie d'un facteur $f_{max0}/f_{max}$ et calcul de la fréquence $f_{min}$, avec

$$f_{min} = f_{min0} * \left( f_{max0}/f_{max} \right)$$

. Cette étape permet d'obtenir une antenne de longueur L' satisfaisant le critère de feuilletage et le critère de minimum de gain sur la bande [$f_{min}$, $f_{max}$].

Les étapes précédentes sont répétées un nombre K' de fois, avec K' ≥ K. Lorsque les K' configurations d'antennes ont été calculées, les K meilleures antennes, c'est-à-dire les K antennes de dimension les plus réduites et ayant la bande de fonctionnement la plus large, et donc qui minimisent le couple (longueur L', fréquence $f_{min}$), sont sélectionnées pour mettre en œuvre la suite du procédé.

Le redimensionnement des antennes par homothétie permet de converger vers un fonctionnement de l'antenne en limite de feuilletage à la fréquence $f_{max}$. C'est donc le meilleur compromis possible à cette fréquence entre la géométrie du réseau et l'encombrement de l'antenne. Les performances du réseau peuvent encore être améliorées par une ultime optimisation de l'élément rayonnant tenant compte de l'impact sur son rayonnement du réseau complet et des dimensions effectives de la structure porteuse.

Le procédé de conception d'un réseau de N antennes selon l'invention comprend ensuite une deuxième étape 602 de calcul, pour chacune des K configurations d'antenne sélectionnées lors de la première étape, d'au moins une configuration de réseau d'antennes. Les orientations des N antennes du réseau d'antennes sont choisies de manière à favoriser l'omnidirectionnalité du réseau d'antennes en polarisation. Les dispositions des N antennes du réseau d'antennes sont choisies de manière à favoriser l'omnidirectionnalité du réseau d'antennes en direction d'arrivée.

Les paramètres d'entrée de cette étape sont les suivants :

- une simulation électromagnétique de chaque antenne parmi les K antennes sélectionnées lors de l'étape précédente, en présence d'une surface métallique. Dans le cas où cette surface est une calotte sphérique, la simulation de l'antenne doit être réalisée sur une portion de sphère dont le rayon est le rayon de courbure de la calotte sphérique ;

- l'encombrement 3D d'une antenne unitaire ;

- l'encombrement $D$ maximum du réseau d'antennes dans le plan horizontal ;

- le nombre $N$ d'antennes du réseau d'antennes ;

- l'équation $z = f(x,y)$ de la surface sur laquelle sont installées les antennes du réseau.

L'étape 602 vise à déterminer un réseau hétérogène d'antennes optimal pour chacune des K meilleures antennes en sortie de l'étape 601 d'optimisation d'antenne. Pour chaque antenne sélectionnée, une simulation ou une mesure des performances de l'antenne sur la surface métallique (par exemple une portion de sphère) sur laquelle elle est disposée doit être effectuée, et les paramètres du modèle (composantes électromagnétiques et coefficients d'interpolation du gain total) sont estimés à partir de ces données. Un tirage aléatoire des positions et orientations des antennes sur la surface métallique est ensuite réalisé. Les positions des antennes sont ajustées pour obtenir un réseau omnidirectionnel en direction d'arrivée et les orientations des antennes sont ajustées pour obtenir un réseau maximisant la diversité de polarisation (la somme des orientations des antennes doit être nulle). Bien entendu, si la surface métallique sur laquelle sont disposées les antennes est plane, le réseau d'antennes ne sera pas tout à fait omnidirectionnel en élévation puisque le gain sera fortement affaibli dans le plan tangent au plan de masse. C'est pourquoi l'utilisation d'une surface métallique non plane est particulièrement avantageuse.

Selon un mode de réalisation de l'invention, l'étape 602 est mise en œuvre en réalisant les calculs suivants pour chacune des K antennes sélectionnées lors de l'étape 601:

- **Etape Réseau.1** : Utilisation des gains complexes $G_V(\Theta,f)$ et $G_H(\Theta,f)$ des réponses de l'antenne unitaire aux polarisations $E_\theta$ et $E_\varphi$ suivant toutes les directions d'arrivées $\Theta = \{\theta, \Delta\}$, obtenus par mesures ou par simulation électromagnétique, pour une maille régulière de fréquences comprises entre $f_{min}$ et $f_{max}$, en présence d'une surface métallique isolante ;

- **Etape Réseau.2** : Pour une pluralité de fréquences f comprises entre $f_{min}$ et $f_{max}$, calcul des paramètres de modélisation du gain d'antenne, en estimant des composantes électromagnétiques **em**($f$) et des coefficients d'interpolation **w**(f) du gain total de l'antenne à partir des gains complexes $G_V(\Theta,\text{f})$ et $G_H(\Theta,\text{f})$, par exemple selon le processus décrit plus loin comme Etape A ;

Puis pour un nombre donné d'itérations :

- **Etape Réseau.3** : Tirage sur une base aléatoire des orientations ($\varphi_1,... \varphi_N$) des antennes dans le plan horizontal, les orientations étant ajustées afin d'obtenir un réseau d'antennes omnidirectionnel en polarisation, par exemple selon le processus décrit plus loin comme Etape D. Pour chaque orientation $\varphi_n$, en déduire les directions **d**$_n$ des antennes selon l'équation (29), à partir de la connaissance de l'équation $z=f(x,y)$ de la surface métallique sur laquelle le réseau est disposé ;

- **Etape Réseau.4** : Tirage sur une base aléatoire des positions (**p**$_1$,... **p**$_N$) des antennes dans le plan horizontal donnant un réseau omnidirectionnel en direction d'arrivée sur la surface métallique d'équation $z = f(x,y)$ par exemple, selon le processus décrit plus loin comme Etape **E** ;

- **Etape Réseau.5** : Test afin de déterminer si les paramètres (**p**$_n$ , **d**$_n$) sont compatibles de l'encombrement de l'antenne. Si ce n'est pas le cas, retour à l'étape Réseau.3.

Les caractéristiques du couple antenne/réseau sont alors mémorisées.
Des variations peuvent être facilement mises en œuvre sur les étapes mentionnées ci-dessus, par exemple en inversant certaines étapes comme le tirage des orientations et le tirage des positions.
Le procédé de conception d'un réseau de N antennes selon l'invention comprend enfin une troisième étape 603 de sélection du ou des meilleurs couples configuration d'antenne/configuration de réseau d'antennes.
Cette étape consiste à évaluer la robustesse aux ambiguïtés de chaque réseau d'antennes dans la bande [f$_{min}$ , f$_{max}$], puis à sélectionner le ou les couples antenne/réseau d'antennes ayant la meilleure robustesse aux ambiguïtés.
Selon un mode de réalisation de l'invention, l'étape 603 peut être mise en œuvre en réalisant, pour chacun des couples antenne/réseau mémorisés :

- **Etape Réseau.6** : Pour une pluralité de fréquences f comprises entre $f_{min}$ et $f_{max}$, calcul de la robustesse aux ambiguïtés du couple antenne/réseau d'antennes en effectuant :

    ○ **Etape Réseau.6.1** : A partir des paramètres {**w**(f), **em**(f)} de l'élément rayonnant, de la longueur d'onde $\lambda$=c/f, des orientations des antennes { **d**$_n$ } et de leurs positions { **p**$_n$ }, calcul des réponses $a_n(\Theta,\mathbf{P}_V)$ et $a_n(\Theta, \mathbf{P}_H)$ des N antennes pour la polarisation $\mathbf{P}_V = [1\ 0]^T$ et $\mathbf{P}_H = [0\ 1]^T$, par exemple selon le processus décrit plus loin comme Etape C ;

    ○ **Etape Réseau.6.2** : Pour chaque direction $\Theta$, orthonormalisation de la base de vecteurs **a**$(\Theta,\mathbf{P}_V)$ et **a**$(\Theta,\mathbf{P}_H)$ pour obtenir les colonnes de la matrice $\tilde{\mathbf{U}}(\Theta) = [\mathbf{a}^{co}(\Theta)\ \mathbf{a}^{cross}(\Theta)]$ ;

    ○ **Etape Réseau.6.3** : selon l'équation (10), calcul de la robustesse aux ambiguïtés $\eta_1(f)$ du couple antenne/-réseau à partir de ladite matrice $\tilde{\mathbf{U}}(\Theta)$ ;

- **Etape Réseau.7** : Déduction de la robustesse aux ambiguïtés du couple antenne/réseau d'antennes en calculant $\eta_{réseau} = \min_{fmin\leq f\leq fmax} \eta_1(f)$ ;

- **Etape Réseau.8** : Sélection du ou des couples antenne/réseau d'antennes maximisant le critère $\eta_{réseau}$.

Avantageusement, le procédé de conception d'un réseau de N antennes selon l'invention comprend une étape supplémentaire 604 d'optimisation de la configuration de la ou des antennes du ou des couples sélectionnés lors de la troisième étape, de manière à optimiser les performances du ou des réseaux d'antennes associés pour tenir compte de l'impact de la forme définitive de la structure métallique porteuse et des phénomènes de couplages entre les éléments du réseau.
En effet, la mise en œuvre des trois premières étapes du procédé permet de sélectionner de manière conjointe un couple antenne/réseau d'antennes, performant, de manière à obtenir les performances d'omnidirectionnalité recherchées pour l'ensemble du réseau. Cependant, les antennes peuvent parfois être encore optimisées sur certains points (taille, couplage, etc...). Cette optimisation additionnelle peut être mise en œuvre en réalisant plusieurs itérations des étapes 601 à 603, en améliorant à chaque itération la configuration des antennes de la première étape à partir de la réponse observée du réseau d'antennes (par exemple en modifiant la surface des antennes si elles sont trop proches, ...). De manière alternative, une étape supplémentaire 604 d'optimisation des antennes peut être réalisée, comprenant la caractérisation fine des propriétés du réseau d'antennes, et l'ajustement des caractéristiques des antennes afin de tenir compte des couplages inter-éléments et/ou des couplages avec la taille relative effective de la structure qui peuvent engendrer des résonances, altérer le lobe principal ou accentuer les lobes secondaires du rayonnement. Cette étape supplémentaire d'ajustement permet d'aboutir à une solution avec un haut niveau de performances compte-tenu de l'encombrement ou du nombre d'antennes imposées.

A cet effet, l'utilisation des antennes dites « pétale » décrites dans le brevet Européen EP 3.335.277 B1 est particulièrement avantageux puisqu'en plus de présenter un encombrement réduit, ces antennes offrent un grand nombre de degrés de liberté permettant d'optimiser finement le gain, l'adaptation d'impédance et les propriétés de rayonnement, par rapport à un encombrement imposé. Il est ainsi possible d'ajuster des caractéristiques secondaires telles que la largueur de l'antenne ou les paramètres des brins courbés $R_1$, $R_2$ et $R_3$ pour augmenter l'efficacité de rayonnement à basse fréquence sans introduire de chevauchement des antennes dans le réseau, ou encore de modifier les rayons de courbure $c_1$ et $c_2$, pour renforcer la directivité des diagrammes pour atténuer le feuilletage, et ce sans nécessairement remettre en cause les dispositions et orientations calculées aux étapes 602 et 603.

À l'inverse, les familles d'éléments rayonnant présentent peu de degrés de liberté pour des optimisations ou offrant peu d'efficacité de rayonnement par rapport à une contrainte de volume imposé, n'offrent pas le même degré d'ajustement, et donc de compromis entre la compacité de la solution et ses performances.

La suite de la description décrit plus en détail différents modes de réalisation permettant de mettre en œuvre la deuxième (602) et la troisième (603) étape du procédé selon un mode de réalisation de l'invention.

L'optimisation de réseau d'antennes est basé sur un modèle paramétrique de la réponse $G_n(\Theta, \mathbf{P})$ d'une antenne donné à l'équation (3). Cette réponse dépend de l'orientation de l'antenne dans l'espace, et des vecteurs champs électrique $\mathbf{E}$ et champs magnétique $\mathbf{H}$ qui la caractérisent, comme représenté sur la figure 2.

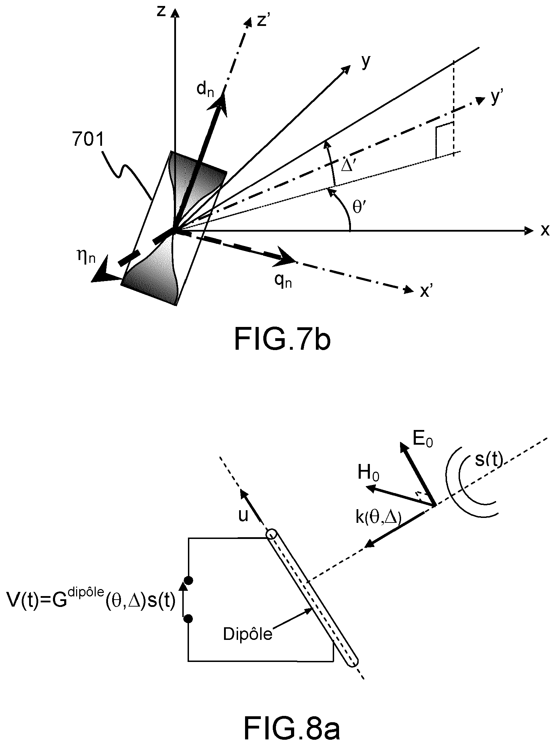

Les composantes électromagnétiques {E, H} de l'antenne sont mesurées ou estimées à partir d'une simulation électromagnétique dans un certain repère (x',y',z'), comme illustré sur la figure 7a, où l'antenne pétale 701 a une direction $\mathbf{d}_0$. On peut alors déduire, par des techniques de changement de repère, le gain de cette antenne lorsqu'elle a une autre orientation $\mathbf{d}_n$ dans le repère (x,y,z) du réseau, comme illustré sur la figure 7b. C'est ainsi qu'il est possible de maîtriser les propriétés algébrique de la matrice $\mathbf{U}(\Theta)$ de l'équation (5), et de donner des conditions sur les orientations des antennes du réseau pour que le réseau soit omnidirectionnel en polarisation.

Selon les figures 4a, 4b et 4c, les champs électrique et magnétique {E, H} de l'antenne d'émission se projettent dans le plan d'onde défini par les vecteurs orthonormées $\mathbf{k}_V(\theta, \Delta)$ et $\mathbf{k}_H(\theta, \Delta)$, orthogonaux au vecteur d'onde $\mathbf{k}(\theta, \Delta)$ :

$$\mathbf{k}_V(\Theta) = \begin{bmatrix} -\cos(\theta)\sin(\Delta) \\ -\sin(\theta)\sin(\Delta) \\ \cos(\Delta) \end{bmatrix} \text{ et } \mathbf{k}_H(\Theta) = \begin{bmatrix} -\sin(\theta) \\ \cos(\theta) \\ 0 \end{bmatrix} \quad (14)$$

Les composantes ($P_V$, $P_H$) du champ électrique $\mathbf{E}_0 = P_V \mathbf{k}_V(\theta, \Delta) + P_H \mathbf{k}_H(\theta, \Delta)$ incident projeté dans le plan d'onde sont les composantes du vecteur de polarisation suivant les composantes $E\theta$ et $E\varphi$. Le champ magnétique $\mathbf{H}_0$ incident projeté dans le plan d'onde est orthogonal à $\mathbf{E}_0$. Le vecteur d'onde $\mathbf{k}(\theta, \Delta)$ est orthogonal au plan d'onde.

La polarisation $\mathbf{P}_0 = [P_V, P_H]^T$ d'une onde incidente est définie par les composantes du champ électrique dans le plan d'onde. D'après la figure 4a :

$$\begin{cases} \tilde{\mathbf{E}}_0(\Theta, \mathbf{P}_0) = \dfrac{\mathbf{E}_0}{E_0} = P_V \times \mathbf{k}_V(\Theta) + P_H \times \mathbf{k}_H(\Theta) \\ \tilde{\mathbf{H}}_0(\Theta, \mathbf{P}_0) = \dfrac{\tilde{\mathbf{H}}_0}{H_0} = -P_H \times \mathbf{k}_V(\Theta) + P_V \times \mathbf{k}_H(\Theta) \end{cases} \quad \text{avec } \mathbf{P}_0 = \begin{bmatrix} P_H \\ P_V \end{bmatrix} \quad (15)$$

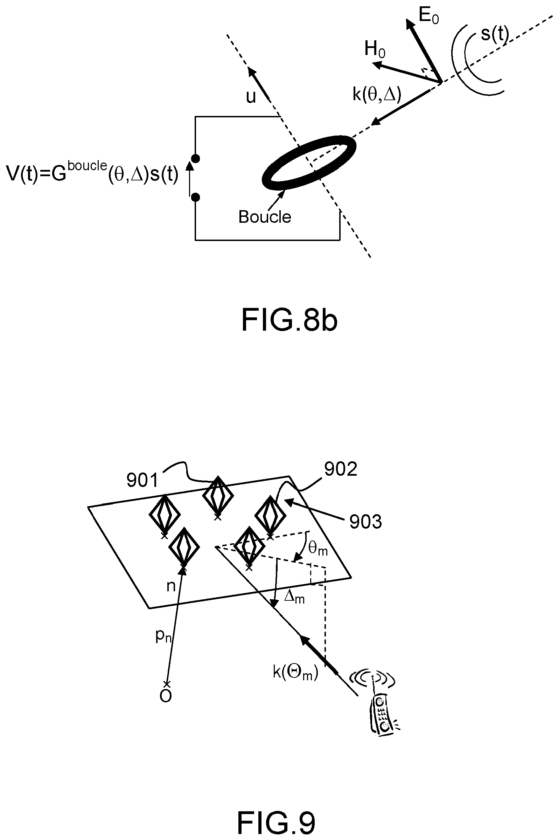

où $\mathbf{P}_0$ est un vecteur normé et où ($E_0$, $H_0$) sont respectivement l'amplitude complexe du champ électrique et du champ magnétique. Selon les figures 8a et 8b, le gain d'un dipôle parfait ou d'une boucle parfaite dépend de l'orientation $\mathbf{d}$ de l'élément rayonnant, ainsi que du gain total $G_T(\Theta)$ de l'antenne, soit :

$$G^{Dipole}\left(\Theta,\mathbf{P}_0\right)=G_T\left(\Theta\right)\times\left(\mathbf{d}^T\tilde{\mathbf{E}}_0\left(\Theta,\mathbf{P}_0\right)\right)=\tilde{G}_T\left(\Theta\right)\times\left(\mathbf{E}_{Dipole}{}^T\tilde{\mathbf{E}}_0\left(\Theta,\mathbf{P}_0\right)\right)$$
$$G^{Boucle}\left(\Theta,\mathbf{P}_0\right)=G_T\left(\Theta\right)\times\left(\mathbf{d}^T\tilde{\mathbf{H}}_0\left(\Theta,\mathbf{P}_0\right)\right)=\tilde{G}_T\left(\Theta\right)\times\left(\mathbf{H}_{Boucle}{}^T\tilde{\mathbf{H}}_0\left(\Theta,\mathbf{P}_0\right)\right) \qquad (16)$$

En effet, le gain d'une boucle dépend uniquement de son champ électrique $\mathbf{E}_{Dipole}$, car son champ magnétique est nul, et inversement pour la boucle qui n'émet pas de champ électrique. D'un point de vue général, on peut caractériser une antenne selon la figure 4a par un couple champ électrique/champ magnétique **(E, H),** qui permettront de donner l'expression suivante du gain :

$$G\left(\Theta,\mathbf{P}_0\right)=\tilde{G}_T\left(\Theta\right)\times\left(\mathbf{E}^T\tilde{\mathbf{E}}_0\left(\Theta,\mathbf{P}_0\right)+\mathbf{H}^T\tilde{\mathbf{H}}_0\left(\Theta,\mathbf{P}_0\right)\right) \qquad (17)$$

Ainsi en polarisation V où $P_V$=1 et $P_H$=0, on a le gain suivant :

$$G_V\left(\Theta\right)=\tilde{G}_T\left(\Theta\right)\times\left(\mathbf{E}^T\mathbf{k}_V\left(\Theta\right)+\mathbf{H}^T\mathbf{k}_H\left(\Theta\right)\right)=\tilde{G}_T\left(\Theta\right)\times\mathbf{u}_V{}^T\left(\Theta\right)\times\mathbf{em} \ \text{ avec } \mathbf{u}_V\left(\Theta\right)=\begin{bmatrix}\mathbf{k}_V\left(\Theta\right)\\\mathbf{k}_H\left(\Theta\right)\end{bmatrix} \text{ et } \mathbf{em}=\begin{bmatrix}\mathbf{E}\\\mathbf{H}\end{bmatrix} \quad (18)$$

où em est le vecteur des composantes électromagnétiques que l'on souhaite estimer à partir des données issues de mesures ou d'une simulation électromagnétique de l'antenne. En polarisation H, où $P_V$=0 et $P_H$=1, le gain vaut :

$$G_H\left(\Theta\right)=\tilde{G}_T\left(\Theta\right)\times\left(\mathbf{E}^T\mathbf{k}_H\left(\Theta\right)-\mathbf{H}^T\mathbf{k}_V\left(\Theta\right)\right)=\tilde{G}_T\left(\Theta\right)\times\mathbf{u}_H{}^T\left(\Theta\right)\times\mathbf{em} \ \text{ avec } \mathbf{u}_H\left(\Theta\right)=\begin{bmatrix}\mathbf{k}_H\left(\Theta\right)\\-\mathbf{k}_V\left(\Theta\right)\end{bmatrix} \text{ et } \mathbf{em}=\begin{bmatrix}\mathbf{E}\\\mathbf{H}\end{bmatrix} \quad (19)$$

L'expression du gain d'une antenne vérifie alors

$$G\left(\Theta,\mathbf{P}_0\right)=\mathbf{g}^T\left(\Theta\right)\mathbf{P}_0 \ \text{ avec } \begin{cases}\mathbf{g}\left(\Theta\right)=\begin{bmatrix}G_H\left(\Theta\right)\\G_V\left(\Theta\right)\end{bmatrix}=\tilde{G}_T\left(\Theta\right)\times\left(\mathbf{K}^H\left(\Theta\right)\mathbf{em}\right)\\[2ex]\mathbf{K}\left(\Theta\right)=\begin{bmatrix}\mathbf{u}_H\left(\Theta\right) & \mathbf{u}_V\left(\Theta\right)\end{bmatrix}\end{cases} \qquad (20)$$

Le gain total $\tilde{G}_T(\Theta)$ de l'antenne, qui prend en compte l'influence de la surface métallique sur laquelle est installée l'antenne, dépend tout particulièrement de cette surface métallique, ainsi que de la distance de l'antenne à cette surface. Généralement sa valeur est faible (voir nulle) dans le plan tangent à la surface. De manière à ne pas faire d'hypothèses particulières sur la physique de l'impact d'une surface métallique sur l'antenne, on modélise ce gain de la manière suivante :

$$\tilde{G}_T\left(\Theta\right)=\mathbf{w}^T\times\mathbf{e}\left(\Theta\right) \text{ avec } \mathbf{e}\left(\Theta\right)=\mathbf{e}_L\left(\theta\right)\otimes\mathbf{e}_L\left(\Delta\right) \ \text{ et } \mathbf{e}_L\left(\varsigma\right)=\begin{bmatrix}\exp\left(-jL\varsigma\right)\\\exp\left(-j(L-1)\varsigma\right)\\\vdots\\\exp\left(jL\varsigma\right)\end{bmatrix} \qquad (21)$$

où $\otimes$ est le produit de Kronecker, $\theta$ est le gisement en radian et $\Delta$ est l'élévation.

En conséquence, une antenne peut se modéliser par le vecteur em des composantes électromagnétiques et le vecteur w contenant les coefficients d'interpolation du gain total, soit :

$$G\left(\Theta,\mathbf{P}_0\right)=\left(\mathbf{w}^T\mathbf{e}\left(\Theta\right)\right)\times\left(\mathbf{em}^T\mathbf{K}\left(\Theta\right)\right)\mathbf{P}_0 \ \text{ avec } \mathbf{em}=\begin{bmatrix}\mathbf{E}\\\mathbf{H}\end{bmatrix} \qquad (22)$$

Dans le procédé de conception d'un réseau d'antennes selon un mode de réalisation de l'invention, le couple **(w,em)** est estimé à partir de mesures ou d'une simulation électromagnétique. Cette solution est différente de celle du brevet EP 2.462.459 B1, où le gain total était supposé indépendant de la direction d'arrivée $\Theta$. On pourra alors en déduire le gain de cette même antenne pour une orientation $\mathbf{d}_n$ différente de celle de la simulation initiale comme cela est illustré sur les figures 7a et 7b.

Que ce soit par des mesures ou par une simulation électromagnétique, il est possible de récupérer à chaque fréquence les gains $G_V(\Theta_i)$ et $G_H(\Theta_i)$ pour un ensemble d'incidences $\{\Theta_i\}$ couvrant tout l'espace angulaire. Pour estimer le vecteur **em,** on construit alors le critère J suivant, s'appuyant sur le fait que selon l'équation (20), le vecteur $\mathbf{g}(\Theta_i)$ est colinéaire au vecteur $\mathbf{K}^T(\Theta_i)$ **em,** soit :

$$J\left(\mathbf{em}\right)=\sum_i \frac{\left|\mathbf{g}^H\left(\Theta_i\right)\mathbf{K}^T\left(\Theta_i\right)\mathbf{em}\right|^2}{\mathbf{g}^H\left(\Theta_i\right)\mathbf{g}\left(\Theta_i\right)}=\mathbf{em}^H\mathbf{Qem}\quad\text{avec}\;\mathbf{Q}=\sum_i \frac{\left|\mathbf{K}\left(\Theta_i\right)\mathbf{g}\left(\Theta_i\right)\mathbf{g}^H\left(\Theta_i\right)\mathbf{K}^T\left(\Theta_i\right)\right|^2}{\mathbf{g}^H\left(\Theta_i\right)\mathbf{g}\left(\Theta_i\right)}\quad(23)$$

Le vecteur **em** doit maximiser le critère J(**em**). En conséquence le vecteur **em** est proportionnel au vecteur propre associé à la plus grande valeur propre $\lambda_{max}(\mathbf{Q})$ de la matrice **Q**. On obtient alors le vecteur **em** normalisé tel que :

$$\mathbf{em}=\arg\max_{\mathbf{em}} J\left(\mathbf{em}\right)\quad\text{avec}\;\mathbf{em}^H\mathbf{em}=1 \qquad\qquad (24)$$

D'après les modèles des équations (20) et (21), le vecteur $\mathbf{g}(\Theta)$ s'écrit :

$$\mathbf{g}\left(\Theta\right)=\mathbf{h}\left(\Theta\right)\times\mathbf{w}\quad\text{avec}\;\mathbf{h}\left(\Theta\right)=\left(\mathbf{K}^H\left(\Theta\right)\times\mathbf{em}\times\mathbf{e}^T\left(\Theta\right)\right) \qquad (25)$$

Le vecteur d'interpolation **w** est estimé au sens des moindres carrés en minimisant le critère suivant :

$$\mathbf{w}=\arg\min_{\mathbf{w}}\sum_i\left\|\mathbf{g}\left(\Theta_i\right)-\mathbf{h}\left(\Theta_i\right)\times\mathbf{em}\right\|^2 \qquad\qquad (26)$$

Le vecteur **w** est déterminé au sens des moindres carrés.

A partir des gains complexes $G_V(\Theta_i)$ et $G_H(\Theta_i)$ pour un ensemble d'incidence $\{\Theta_i\}$ de l'antenne sur une surface métallique, l'estimation des composantes électromagnétiques **em** et des coefficients d'interpolation **w** du gain total peut être obtenue en mettant en œuvre le processus de l'étape A qui suit :

- **Etape A.1** : Construction des vecteurs $\mathbf{g}(\Theta)$ selon l'équation (20) pour toutes les incidences $\Theta$ appartenant à l'ensemble $\{\Theta_i\}$ des mesures présentes ;

- **Etape A.2** : Construction des matrice **K**(O) selon les équations (14), (18), (19), et (20) pour toutes les incidences $\Theta$ appartenant à l'ensemble $\{\Theta_i\}$ des mesures présentes ;

- **Etape A.3** : Calcul de la matrice **Q** selon l'équation (23) ;

- **Etape A.4** : Calcul du vecteur propre **em** associé à la valeur propre principale de **Q ;**

- **Etape A.5** : Recherche du vecteur d'interpolation **w** selon l'équation (26).

La figure 9 représente un réseau homogène comprenant 5 antennes 901 902 disposées sur un plan 903.

Le réseau est constitué d'antennes de positions $\mathbf{p}_n = [x_n\; y_n\; z_n]^T$ selon la figure 10, et d'orientations $\mathbf{d}_n$ selon les figures 7a et 7b. L'objectif est de déduire son gain $G_n(\Theta=\{\theta, \Delta\})$ dans le repère du réseau, sachant que les coefficients (**w,** **em)** ont été estimés dans le repère de la simulation tel que $G_n(\Theta=\{\theta, \Delta\})=G(\Theta'=\{\theta', \Delta'\})$. Il y a donc un changement de base à effectuer pour en déduire l'incidence $\Theta$ à partir de l'incidence $\Theta'$. Il existe donc une matrice de rotation $\Gamma_n$ telle que :

$$\begin{cases}\mathbf{k}\left(\Theta\right)=\mathbf{\Gamma}_n\times\tilde{\mathbf{k}}\left(\Theta'\right)\\ \mathbf{k}_V\left(\Theta\right)=\mathbf{\Gamma}_n\times\tilde{\mathbf{k}}_V\left(\Theta'\right)\\ \mathbf{k}_H\left(\Theta\right)=\mathbf{\Gamma}_n\times\tilde{\mathbf{k}}_H\left(\Theta'\right)\end{cases}\quad\text{et donc}\;\begin{cases}\mathbf{E}_n=\mathbf{\Gamma}_n\mathbf{E}\\ \mathbf{H}_n=\mathbf{\Gamma}_n\mathbf{H}\\ \mathbf{d}_n=\mathbf{\Gamma}_n\mathbf{d}_0\end{cases}\qquad(27)$$

où ($\mathbf{E}_n$, $\mathbf{H}_n$) sont les vecteurs champ électrique et champ magnétique de l'antenne de direction $\mathbf{d}_n$ dans le repère du réseau. On note $\mathbf{d}_0$ la direction de l'antenne dans le repère de la simulation où, selon les figures 7a et 7b, $\mathbf{d}_0$ =[0 0 1]'. Les vecteurs $\tilde{\mathbf{k}}(\Theta')$, $\tilde{\mathbf{k}}_H(\Theta')$ et $\tilde{\mathbf{k}}_V(\Theta')$ sont respectivement le vecteur d'onde et les vecteurs du plan d'onde dans le repère de la simulation. La suite vise à déterminer $\Gamma_n$ sachant que les antennes sont installées sur une surface d'équation $z_n = f(x_n, y_n)$.

Selon les figures 7a et 7b, la caractérisation ou simulation de l'antenne est effectuée dans le repère orthonormé ($\mathbf{q}_n = -\eta_n \wedge \mathbf{d}_n$, $-\eta_n$, $\mathbf{d}_n$), d'origine $\mathbf{O} = (0, 0, 0)$, où $\eta_n$ est la normale au plan de l'antenne correspondant à la direction du maximum de rayonnement et l'opérateur $\wedge$ désigne le produit vectoriel . Dans le réseau, l'antenne se trouve dans le repère orthonormé d'axes (x,y,z) ayant pour origine sa position $\mathbf{p}_n$.

On construit ici un réseau où le vecteur normal $\eta_n$ des antennes est aussi la normale de la surface d'équation $z_n = f(x_n, y_n)$. En conséquence ce vecteur a l'expression suivante :

$$\boldsymbol{\eta}_n = \frac{1}{\eta_n} \begin{bmatrix} -\dfrac{\partial f(x_n, y_n)}{\partial x} \\ -\dfrac{\partial f(x_n, y_n)}{\partial y} \\ 1 \end{bmatrix} \quad \text{avec } \eta_n = \sqrt{1 + \left(\frac{\partial f(x_n, y_n)}{\partial x}\right)^2 + \left(\frac{\partial f(x_n, y_n)}{\partial y}\right)^2} \qquad (28)$$

Dans le cas d'une calotte sphérique d'équation $z_n = \sqrt{R^2 - x_n^2 - y_n^2}$ , on a $\eta_n = \mathbf{p}_n$. D'autre part la direction $\mathbf{d}_n$ de l'antenne sera choisie de sorte que la projection du vecteur direction $\mathbf{d}_n$ dans le plan horizontal vérifie $\mathbf{d}(\varphi_n)$ = $[\cos(\varphi_n) \sin(\varphi_n)]^T$. Le vecteur $\mathbf{d}_n$ s'écrit alors de la manière suivante :

$$\mathbf{d}_n = \frac{1}{\sqrt{1 + (f_n)^2}} \begin{bmatrix} \mathbf{d}(\varphi_n) \\ f_n \end{bmatrix} \quad \text{avec} \begin{cases} \mathbf{d}(\varphi) = \begin{bmatrix} \cos(\varphi) \\ \sin(\varphi) \end{bmatrix} \\ f_n = \dfrac{\partial f(x_n, y_n)}{\partial x}\cos(\varphi_n) + \dfrac{\partial f(x_n, y_n)}{\partial y}\sin(\varphi_n) \end{cases} \qquad (29)$$

Le dernier vecteur $\mathbf{q}_n$ du trièdre du repère orthonormé de la simulation électromagnétique est donc le produit vectoriel suivant selon les figures 7a et 7b :

$$\mathbf{q}_n = -\boldsymbol{\eta}_n \wedge \mathbf{d}_n \qquad (30)$$

La matrice de rotation de l'équation (27) a alors l'expression suivante :

$$\boldsymbol{\Gamma}_n = \begin{bmatrix} \mathbf{q}_n & -\boldsymbol{\eta}_n & \mathbf{d}_n \end{bmatrix} \qquad (31)$$

Le processus Etape B permettant de construire la matrice de rotation $\Gamma_n$ d'une antenne d'orientation $\varphi_n$ dans le plan horizontal et de position $\mathbf{p}_n = [x_n\ y_n\ z_n]^T$ sur une surface d'équation $z_n = f(x_n, y_n)$ est alors le suivant :

- **Etape B.1** : Calcul du vecteur $\eta_n$ normal à la surface d'équation $z_n = f(x_n, y_n)$ au point de position $\mathbf{p}_n = [x_n\ y_n\ z_n]^T$ selon l'équation (28) ;

- **Etape B.2 :** Calcul du vecteur d'orientation $\mathbf{d}_n$ à partir de l'angle $\varphi_n$ selon l'équation (29) ;

- **Etape B.3** : Calcul du vecteur $\mathbf{q}_n$ par le produit vectoriel $\mathbf{q}_n = -\eta_n \wedge \mathbf{d}_n$ ;

- **Etape B.4** : Construction de la matrice de rotation $\Gamma_n$ en effectuant $\Gamma_n = [\mathbf{q}_n\ -\eta_n\ \mathbf{d}_n]$.

Pour une direction $\Theta$, il est alors possible de calculer le vecteur d'onde $\tilde{\mathbf{k}}(\Theta')=[u'\ v'\ w']^T = \Gamma_n^T \mathbf{k}(\Theta)$ dans le repère de la simulation, et selon l'équation (4), d'en déduire de la manière suivante l'incidence $\Theta'= \{ \theta', \Delta'\}$ dans le repère de la

simulation :

$$\theta' = angle(u'+jv')$$
$$\Delta' = angle(u'\cos(\theta')+v'\sin(\theta')+jw') \qquad (32)$$

Il est alors possible de calculer le gain total de l'antenne de direction $\mathbf{d}_n$ et de position $\mathbf{p}_n$ selon l'équation (21) en effectuant le calcul suivant :

$$\tilde{G}_n^{T}(\Theta) = \mathbf{w}^T \times \mathbf{e}(\Theta' = \{\theta',\Delta'\}) \text{ avec } \mathbf{e}(\Theta) = \mathbf{e}_L(\theta)\otimes\mathbf{e}_L(\Delta) \text{ et } \mathbf{e}_L(\varsigma) = \begin{bmatrix} \exp(-jL\varsigma) \\ \exp(-j(L-1)\varsigma) \\ \vdots \\ \exp(jL\varsigma) \end{bmatrix} \quad (33)$$

D'après les équations (18), (19) et (20), l'expression de la matrice K(O) est la suivante :

$$\mathbf{K}(\Theta) = \begin{bmatrix} \mathbf{k}_H(\Theta) & \mathbf{k}_V(\Theta) \\ -\mathbf{k}_V(\Theta) & \mathbf{k}_H(\Theta) \end{bmatrix} \qquad (34)$$

Selon l'équation (27), on sait alors que :

$$\mathbf{K}(\Theta') = \left(\mathbf{I}_2 \otimes \mathbf{\Gamma}_n^{T}\right) \times \mathbf{K}(\Theta) \qquad (35)$$

où $\otimes$ est le produit de Kronecker et $\mathbf{I}_2$ la matrice identité de dimension 2. Selon l'équation (22), le gain de l'antenne de direction $\mathbf{d}_n$ et position $\mathbf{p}_n$ s'écrit alors :

$$G_n(\Theta,\mathbf{P}_0) = \tilde{G}_n^{T}(\Theta) \times \left(\mathbf{g}_n^{T}\mathbf{K}(\Theta)\right)\mathbf{P}_0 \text{ avec } \mathbf{g}_n = \left(\mathbf{I}_2 \otimes \mathbf{\Gamma}_n^{T}\right)^T \mathbf{em} \qquad (36)$$

Selon l'équation (3), la réponse de l'antenne de direction $\mathbf{d}_n$ et position $\mathbf{p}_n$ s'écrit alors de la manière suivante :

$$a_n(\Theta,\mathbf{P}_0) = a_n(\Theta) \times \mathbf{U}_n(\Theta,\mathbf{P}_0) \text{ avec } \begin{cases} \mathbf{U}_n(\Theta,\mathbf{P}_0) = \mathbf{g}_n^{T}\mathbf{u}(\Theta,\mathbf{P}_0) \\ \mathbf{u}(\Theta,\mathbf{P}_0) = \mathbf{K}(\Theta)\mathbf{P}_0 \\ a_n(\Theta) = \tilde{G}_n^{T}(\Theta) \times \exp\left(j\frac{2\pi}{\lambda}\mathbf{k}(\Theta)^T\mathbf{p}_n\right) \end{cases} \qquad (37)$$

Le processus Etape C de construction de la réponse d'une antenne à une direction $\Theta$ et une polarisation $\mathbf{P}$ est la suivante, sachant que l'antenne est modélisée par le vecteur $\mathbf{em}$, le vecteur d'interpolation w, sa position $\mathbf{p}_n$ et la matrice de rotation $\mathbf{\Gamma}_n$ calculée par exemple en suivant les étapes de l'étape B décrite ci-dessus à partir d'une orientation $\varphi_n$ de l'antenne dans le plan horizontal :

- **Etape C.1** : calcul du vecteur d'onde dans le repère de la simulation en effectuant $\tilde{\mathbf{k}}(\Theta')=[u'\ v'\ w']^T = \mathbf{\Gamma}_n^{T}\mathbf{k}(\Theta)$ ;
- **Etape C.2** : calcul de l'incidence $\Theta' = \{\theta',\Delta\}$ dans le repère de la simulation en effectuant $\theta' = angle(u'+jv')$ et $\Delta' = angle(u'\cos(\theta')+v'\sin(\theta')+jw')$ ;
- **Etape C.3**: calcul du gain total de l'antenne en effectuant $\tilde{G}_n^{T}(\Theta) \times \mathbf{w}^{T}(\Theta' = \{\theta',\Delta'\})$, sachant que la fonction $\mathbf{e}(\Theta)$ est définie à l'équation (33) ;
- **Etape C.4** : calcul de la matrice $\mathbf{K}(O)$ selon les équations (14) et (34) puis calcul de $\mathbf{u}(\Theta,\mathbf{P}_0) = \mathbf{K}(\Theta)\mathbf{P}_0$ ;
- **Etape C.5** : calcul du vecteur $\mathbf{g}_n$ en effectuant $\mathbf{g}_n =(\mathbf{I}_2 \otimes \mathbf{\Gamma}_n^{T})^T\mathbf{em}$ ;
- **Etape C.6** : calcul de $\mathbf{U}_n(\Theta,\mathbf{P}_0) = \mathbf{g}_n^{T}\mathbf{u}(\Theta,\mathbf{P}_0)$ ;

- **Etape C.7** : calcul de $a_n(\Theta) = \tilde{G}_n^{\,T}(\Theta) \times \exp\left( j\dfrac{2\pi}{\lambda} \mathbf{k}(\Theta)^T \mathbf{p}_n \right)$ ;

- **Etape C.8:** calcul de la réponse de l'antenne en effectuant $a_n(\Theta, \mathbf{P}_0) = a_n(\Theta) \times \mathbf{U}_n(\Theta, \mathbf{P}_0)$.

La suite de la description décrit un mode de réalisation permettant de déterminer les positions et orientations des antennes, afin de s'approcher au mieux des conditions d'omnidirectionnalité en direction d'arrivée et en polarisation recherchées.

Le vecteur directeur s'écrit alors de la manière suivante :

$$\mathbf{a}(\Theta, \mathbf{P}) = \Phi(\Theta) \times \mathbf{G} \times \mathbf{u}(\Theta, \mathbf{P}) \tag{38}$$

où :

$$\Phi(\Theta) = \begin{bmatrix} a_1(\Theta) & 0 & 0 \\ 0 & \ddots & 0 \\ 0 & 0 & a_N(\Theta) \end{bmatrix} \quad \text{et} \quad \mathbf{G} = \begin{bmatrix} \mathbf{g}_1^{\,T} \\ \vdots \\ \mathbf{g}_N^{\,T} \end{bmatrix} \tag{39}$$

La structure algébrique de **G** conditionne les conditions de la diversité de polarisation. On peut ainsi établir des conditions sur les angles $(\varphi_1, \dots \varphi_N)$ d'orientation des antennes dans le plan horizontal, en établissant une condition sur le n-uplet $(\varphi_1, \dots \varphi_N)$ pour que le réseau soit omnidirectionnel en polarisation. Pour cela il faut que les colonnes de G forment une base orthonormée. Pour simplifier nous considérons le cas d'un réseau plan vérifiant :

$$\mathbf{d}_n = \mathbf{d}(\varphi_n) \quad \text{et} \quad \boldsymbol{\eta}_n = \begin{bmatrix} 0 \\ 0 \\ 1 \end{bmatrix} \quad \text{avec} \quad \mathbf{d}(\varphi) = \begin{bmatrix} \cos(\varphi) \\ \sin(\varphi) \\ 0 \end{bmatrix} \tag{40}$$

On en déduit selon les équations (30) et (31) que

$$\boldsymbol{\Gamma}_n = \boldsymbol{\Gamma}(\varphi_n) \quad \text{avec} \quad \boldsymbol{\Gamma}(\varphi) = \begin{bmatrix} -\sin(\varphi) & 0 & \cos(\varphi) \\ \cos(\varphi) & 0 & \sin(\varphi) \\ 0 & -1 & 0 \end{bmatrix} \tag{41}$$

Selon les équations (22), (27) et (36), on sait que

$$\mathbf{g}_n = \begin{bmatrix} \boldsymbol{\Gamma}(\varphi_n)\mathbf{E} \\ \boldsymbol{\Gamma}(\varphi_n)\mathbf{H} \end{bmatrix} = \begin{bmatrix} \mathbf{E}_n \\ \mathbf{H}_n \end{bmatrix} \quad \text{avec} \quad \mathbf{E} = \begin{bmatrix} E_x \\ E_y \\ E_z \end{bmatrix} \quad \text{et} \quad \mathbf{H} = \begin{bmatrix} M_x \\ M_y \\ M_z \end{bmatrix} \tag{42}$$

En conséquence la matrice G de l'équation (39) vaut :

$$\mathbf{G} = \begin{bmatrix} \mathbf{G}_x \times E_x & \mathbf{G}_x \times M_x \end{bmatrix} + \begin{bmatrix} \mathbf{G}_y \times E_y & \mathbf{G}_y \times M_y \end{bmatrix} + \begin{bmatrix} \mathbf{G}_z \times E_z & \mathbf{G}_z \times M_z \end{bmatrix}$$

$$\text{avec} \begin{cases} \mathbf{G}_x = \begin{bmatrix} -s(\varphi) & c(\varphi) & 0 \end{bmatrix} \\ \mathbf{G}_y = \begin{bmatrix} 0 & 0 & 1 \end{bmatrix} \\ \mathbf{G}_z = \begin{bmatrix} c(\varphi) & s(\varphi) & 0 \end{bmatrix} \end{cases} \quad \text{où} \quad \mathbf{c}(\varphi) = \begin{bmatrix} \cos(\varphi_1) \\ \vdots \\ \cos(\varphi_N) \end{bmatrix} \quad \mathbf{s}(\varphi) = \begin{bmatrix} \sin(\varphi_1) \\ \vdots \\ \sin(\varphi_N) \end{bmatrix} \quad \mathbf{1} = \begin{bmatrix} 1 \\ \vdots \\ 1 \end{bmatrix} \tag{43}$$

La condition pour que le réseau soit à diversité de polarisation est que la matrice [$\mathbf{c}(\varphi)$ $\mathbf{s}(\varphi)$ 1] soit de rang plein supérieur à 6. On voit alors que cela nécessite qu'il y ait au moins une antenne dont l'orientation est différente de celle des autres antennes, de manière à ce que les vecteurs $\mathbf{c}(\varphi)$ ou $\mathbf{s}(\varphi)$ ne soient pas colinéaires au vecteur unité 1. D'autre part, on voit que pour se rapprocher d'une condition d'omnidirectionnalité au niveau de la polarisation, il faut trouver un jeu de phases ($\varphi_1,... \varphi_N$) tel que les vecteurs $\mathbf{c}(\varphi)$ et $\mathbf{s}(\varphi)$ soient orthogonaux. On propose ci-dessous une méthode pour obtenir une telle condition, basée sur la propriété suivante, en posant $\mathbf{b}(\varphi) = \mathbf{c}(\varphi) + j\mathbf{s}(\varphi)$ :
les vecteurs $\mathbf{c}(\varphi)$ et $\mathbf{s}(\varphi)$ sont orthogonaux si et seulement $\mathbf{b}(\varphi)$ et $\mathbf{b}^*(\varphi)$ (44) sont orthogonaux.

On construit alors le vecteur structuré suivant

$$\tilde{\mathbf{b}}(\alpha) = \mathbf{b}\left(\boldsymbol{\varphi} = \left\{\varphi_1 = x_1\alpha \quad \cdots \quad \varphi_N = x_N\alpha\right\}\right) \tag{45}$$

Après un tirage aléatoire du n-uplet $\{x_2,... , x_N\}$ tel que $x_{min} < x_i < x_{max}$ et $x_1 = 1$, on cherche la valeur $\alpha_{min}$ minimisant le critère $C_\varphi(\alpha)$ suivant :

$$\alpha_{min} = \arg\max_{0 \leq \alpha \leq 2\pi} C_\varphi(\alpha) \quad \text{avec} \quad C_\varphi(\alpha) = \tilde{\mathbf{b}}^T(\alpha)\tilde{\mathbf{b}}(\alpha) \tag{46}$$

Le n-uplets de phase ($\varphi_1,... \varphi_N$) est tel que $\varphi_i = \alpha_{min} x_i$.

Le processus Etape D de calcul des directions ($\varphi_1,... \varphi_N$) des antennes dans le plan horizontal peut alors être le suivant :

- **Etape D.1** : Tirage du n-uplets $\{x_2,... , x_N\}$ tel que $x_{min} < x_i < x_{max}$ et $x_1 = 1$ ;

- **Etape D.2 :** Construction du vecteur $\tilde{\mathbf{b}}(\alpha) = \mathbf{b}(\varphi = \{\varphi_1 = x_1\alpha \cdots \varphi_N = x_N\alpha\})$ pour $0 \leq \alpha < 2\pi$ sachant que $\mathbf{b}(\varphi) = [\exp(j\varphi_1) \cdots \exp(j\varphi_N)]^T$ ;

- **Etape D.3 :** Recherche de l'angle $\alpha_{min}$ minimisant le critère $C_\varphi(\alpha) = \tilde{\mathbf{b}}^T(\alpha)\tilde{\mathbf{b}}(\alpha)$ pour $0 \leq \alpha < 2\pi$ ;

- **Etape D.4** : Calcul du n-uplets des phases de direction des antennes dans le plan horizontal en effectuant $\{\varphi_1 = x_1\alpha_{min} \cdots \varphi_N = x_N\alpha_{min}\}$ ;

- **Etape D.5.** Déduction des orientations $\mathbf{d}_n$ à partir des n-uplets $\varphi_n$ selon l'équation (29), à partir de l'équation $z_n = f(x_n, y_n)$ de la surface métallique.

En ce qui concerne la détermination d'un jeu de position $\mathbf{p}_n$ permettant d'obtenir l'omnidirectionalité en direction d'arrivée, cette propriété est vérifiée lorsque la matrice $MS_{\Theta 1}$ de l'équation (13) est diagonale, et la matrice $MS_{k(\Theta 1)}$ est proportionnelle à l'identité. Cette condition est vraie lorsque la matrice $\mathbf{H}(k(\Theta_1))$ de l'équation (12) est diagonale. D'après l'article « *High Resolution direction finding : from performance toward antenna array optimization - The mono-source case* », l'expression de cette matrice est la suivante :

$$\mathbf{H}\left(\mathbf{k}\left(\Theta_m\right)\right) = 2N\left(\frac{2\pi}{\lambda}\right)^2 \mathbf{D}_{pp}\left(\mathbf{g}_m, \mathbf{G}, \lambda\right)$$

$$\begin{cases} \mathbf{g}_m = \mathbf{G} \times \mathbf{u}\left(\Theta_m, \mathbf{P}\right) \\ \mathbf{D}_{pp}\left(\mathbf{g}, \mathbf{G}, \lambda\right) = \mathbf{D}_{pp}\left(\mathbf{g}\right) + \left(\tilde{J}_u\left(\Theta\right)^T \mathbf{D}_{gg}\left(\mathbf{u}\right) \tilde{J}_u\left(\Theta\right)\right) \times \left(\frac{2\pi}{\lambda}\right)^{-2} \\ \tilde{J}_u\left(\Theta\right)^T = J\left(\Theta\right)\left(J\left(\Theta\right)^T J\left(\Theta\right)\right)^{-1} J_u\left(\Theta\right)^T \end{cases} \tag{47}$$

**où les matrices** d'ouvertures $\mathbf{D}_{pp}$ (g) puis $\mathbf{D}_{gg}$ (u) s'écrivent :

$$\begin{cases} \tilde{\mathbf{D}}_{pp}(\mathbf{g}) = \sum_{n=1}^{N} w_n(\mathbf{g})\big(\mathbf{p}_n - \overline{\mathbf{p}}(\mathbf{g})\big)\big(\mathbf{p}_n - \overline{\mathbf{p}}(\mathbf{g})\big)^T \\ \tilde{\mathbf{D}}_{gg}(\mathbf{u}) = \left(\dfrac{\mathbf{G}^H \mathbf{G}}{\mathbf{g}^H \mathbf{g}}\right) - \overline{\mathbf{g}}\,\overline{\mathbf{g}}^H \end{cases} \quad \text{avec} \begin{cases} \overline{\mathbf{g}} = \dfrac{\mathbf{G}^H \mathbf{g}}{\mathbf{g}^H \mathbf{g}} \quad \text{et} \quad \mathbf{g} = \mathbf{G}\mathbf{u} \\ \overline{\mathbf{p}}(\mathbf{g}) = \sum_{n=1}^{N} \mathbf{p}_n w_n(\mathbf{g}) \\ w_n(\mathbf{g}) = \dfrac{|\mathbf{g}(n)|^2}{\mathbf{g}^H \mathbf{g}} \end{cases} \quad (48)$$

avec g(n) la n-ième composante de g. Les matrices $J(\Theta)$ et $J_n(\Theta)$ sont les Jacobiens respectifs de $\mathbf{k}(\Theta)$ et $u(\Theta,\mathbf{P})$ avec :

$$J(\Theta) = \begin{bmatrix} -\sin(\theta)\cos(\Delta) & -\cos(\theta)\sin(\Delta) \\ \cos(\theta)\cos(\Delta) & -\sin(\theta)\sin(\Delta) \\ 0 & \cos(\Delta) \end{bmatrix} \quad \text{et} \quad J_u(\Theta) = P_V \times \begin{bmatrix} J_V(\Theta) \\ J_H(\Theta) \end{bmatrix} + P_H \times \begin{bmatrix} -J_H(\Theta) \\ J_V(\Theta) \end{bmatrix} \quad (49)$$

et où les matrices $J_H(\Theta)$ et $J_V(\Theta)$ sont les Jacobiens respectifs de $\mathbf{k}_H(\Theta)$ et $\mathbf{k}_V(\Theta)$ avec :

$$J_V(\Theta) = \begin{bmatrix} \sin(\theta)\sin(\Delta) & -\cos(\theta)\cos(\Delta) \\ -\cos(\theta)\sin(\Delta) & -\sin(\theta)\cos(\Delta) \\ 0 & -\sin(\Delta) \end{bmatrix} \quad \text{et} \quad J_H(\Theta) = \begin{bmatrix} \cos(\theta) & 0 \\ \sin(\theta) & 0 \\ 0 & 0 \end{bmatrix} \quad (50)$$

Selon l'équation (40), on considère dans le processus un réseau d'antennes dont les orientations dans le plan horizontal dépendent du N-uplets de phases $(\varphi_1, \dots \varphi_N)$, avec $\mathbf{d}_n = d(\varphi)$. Dans ce cas la matrice **G** a la structure de l'équation (43). En conséquence, on peut dire selon l'équation (47) que

$$\mathbf{g}_m = \mathbf{G} \times \mathbf{u}(\Theta_m, \mathbf{P}) = \begin{bmatrix} \mathbf{c}(\boldsymbol{\varphi}) & \mathbf{s}(\boldsymbol{\varphi}) \end{bmatrix} \times \tilde{\mathbf{u}} \quad \text{avec} \quad \mathbf{c}(\boldsymbol{\varphi}) = \begin{bmatrix} \cos(\varphi_1) \\ \vdots \\ \cos(\varphi_N) \end{bmatrix} \quad \text{et} \quad \mathbf{s}(\boldsymbol{\varphi}) = \begin{bmatrix} \sin(\varphi_1) \\ \vdots \\ \sin(\varphi_N) \end{bmatrix} \quad (51)$$

où $\tilde{\mathbf{u}}$ est un vecteur de dimension 2 dépendant de l'incidence $\Theta_m$, de la polarisation P et des composantes électromagnétiques de l'antenne. Dans ce contexte particulier, on peut alors dire que :

$$\tilde{\mathbf{D}}_{pp}\left(\mathbf{g}_1 = \frac{\mathbf{c}(\boldsymbol{\varphi}) + j\mathbf{c}(\boldsymbol{\varphi})}{2}\right) = \tilde{\mathbf{D}}_{pp}\left(\mathbf{g}_2 = \frac{\mathbf{c}(\boldsymbol{\varphi}) - j\mathbf{c}(\boldsymbol{\varphi})}{2}\right) = \tilde{\mathbf{D}}_{pp}{}^{geo}$$

$$\begin{cases} \tilde{\mathbf{D}}_{pp}{}^{geo} = \dfrac{1}{N}\sum_{n=1}^{N}\big(\mathbf{p}_n - \overline{\mathbf{p}}\big)\big(\mathbf{p}_n - \overline{\mathbf{p}}\big)^T \\ \overline{\mathbf{p}} = \dfrac{1}{N}\sum_{n=1}^{N}\mathbf{p}_n \end{cases} \quad \text{car} \begin{cases} \mathbf{g}_1(n) = \exp(j\varphi_n) \\ \mathbf{g}_2(n) = \exp(-j\varphi_n) \end{cases} \quad \text{et donc} \quad w_n(\mathbf{g}_1) = w_n(\mathbf{g}_2) = \dfrac{1}{N} \quad (52)$$

Selon l'équation (47), une condition nécessaire pour s'approcher de l'omnidirectionnalité en direction d'arrivée est que la matrice $\tilde{\mathbf{D}}_{pp}{}^{geo}$ soit proportionnelle à l'identité, exactement comme dans le cas des réseaux géométriques où la condition est de plus suffisante. La matrice $\mathbf{H}(\mathbf{k}(\Theta_m))$, qui est fonction de l'incidence $\Theta_m$, est alors pour un grand secteur angulaire proportionnel à l'identité.

Comme proposé dans la demande de brevet EP 2.458.398 A2 et dans le brevet EP 2.462.459 B1, le choix des positions se fait en tirant aléatoirement un premier jeu de position $\{\mathbf{p}_n^0\}$, puis en le transformant de la manière suivante pour obtenir un jeu de position $\{\mathbf{p}_n^1\}$ associé à un réseau quasiment omnidirectionnel en gisement et en élévation :

$$\mathbf{p}_n{}^1 = \mathbf{W}^{-1}\left(\mathbf{p}_n{}^0 - \bar{\mathbf{p}}\right) \quad \text{avec } \tilde{\mathbf{D}}_{pp}{}^{geo} = \mathbf{W}\mathbf{W}^H \text{ et } \begin{cases} \tilde{\mathbf{D}}_{pp}{}^{geo} = \dfrac{1}{N}\sum_{n=1}^{N}\left(\mathbf{p}_n{}^0 - \bar{\mathbf{p}}\right)\left(\mathbf{p}_n{}^0 - \bar{\mathbf{p}}\right)^T \\ \bar{\mathbf{p}} = \dfrac{1}{N}\sum_{n=1}^{N}\mathbf{p}_n{}^0 \end{cases} \tag{53}$$

Le jeu de positions $\{\mathbf{p}_n{}^1\}$ est ensuite modifié par un facteur homothétique pour que le réseau respecte un encombrement D donné par le cahier des charges. Cela peut se faire de la manière suivante :

$$\mathbf{p}_n = \left(\frac{D}{D_{ini}}\right)\times\mathbf{p}_n{}^1 \quad \text{avec } D_{ini} = \max_{i,j}\left\|\mathbf{p}_i{}^1 - \mathbf{p}_j{}^1\right\| \tag{54}$$

où $\|\mathbf{p}_i{}^1 - \mathbf{p}_j{}^1\|$ est la distance entre la $i^{ème}$ et la $j^{ème}$ antenne. Sachant que les coordonnées $\mathbf{p}_n = [x_n\ y_n\ z_n]^T$ sont contraintes à une surface d'équation $z_n = f(x_n, y_n)$, le calcul des positions se fait initialement dans le plan horizontal avec $\mathbf{p}_n{}^0 = [x_n\ y_n\ 0]^T$.

Le processus Etape E de calcul des positions des antennes d'un réseau d'antennes sous une contrainte d'omnidirectionalité en direction d'arrivée et d'encombrement D peut être le suivant :

- **Etape E.1** : tirage aléatoire de N positions d'antennes dans le plan horizontal avec $\{\mathbf{p}_n{}^0 = [x_n\ y_n]^T$ pour $1 \leq n \leq N\}$ ;

- **Etape E.2** : calcul de la matrice d'ouverture équivalente du réseau avec

$$\tilde{\mathbf{D}}_{pp}{}^{geo} = \sum_{n=1}^{N}\left(\mathbf{p}_n{}^0 - \bar{\mathbf{p}}\right)\left(\mathbf{p}_n{}^0 - \bar{\mathbf{p}}\right)^T / N \quad \text{et} \quad \bar{\mathbf{p}} = \sum_{n=1}^{N}\mathbf{p}_n{}^0 / N \quad ;$$

- **Etape E.3** : décomposition en éléments propres de $\tilde{\mathbf{D}}_{pp}{}^{geo}$, avec $\tilde{\mathbf{D}}_{pp}{}^{geo} = \mathbf{E}\Lambda\mathbf{E}^H$, où E est la matrice des vecteurs propres et A la matrice diagonale des valeurs propres ;

- **Etape E.4** : calcul de la matrice W pour le blanchiment avec $\mathbf{W} = \mathbf{E}\Lambda^{1/2}$ ;

- **Etape E.5** : calcul d'un jeu de positions d'antennes donnant l'omnidirectionalité en effectuant $\mathbf{p}_n{}^1 = \mathbf{W}^{-1}(\mathbf{p}_n{}^0 - \bar{\mathbf{p}})$ pour $1 \leq n \leq N$ ;

- **Etape E.6** : calcul de l'encombrement du réseau $\{\mathbf{p}_n{}^1\}$ en effectuant $D_{ini} = \max_{i,j}\left\|\mathbf{p}_i{}^1 - \mathbf{p}_j{}^1\right\|$ ;

- **Etape E.7** : redimensionnement du réseau en effectuant $\mathbf{p}_n{}^2 = [x_n\ y_n]^T = (D / D_{ini}) \times \mathbf{p}_n{}^1$ ;

- **Etape E.8** : calcul des positions $\mathbf{p}_n$ conformes à la surface en effectuant les opérations suivantes pour $1 \leq n \leq N$ : $\mathbf{p}_n = [x_n\ y_n\ f(x_n, y_n)]^T$.

Le procédé de conception d'un réseau d'antennes selon l'invention réalise une optimisation conjointe de l'antenne élémentaire avec le réseau d'antennes. L'optimisation se fait à partir des paramètres géométriques de l'antenne (longueur, largeur, hauteur, courbures de la pétale etc...) ainsi que des paramètres du réseau tels que la position et l'orientation de chacune des antennes élémentaires. Il vise à déterminer le meilleur jeu de paramètres donnant un réseau omnidirectionnel en direction d'arrivée et en polarisation, et ayant une bonne robustesse aux ambiguïtés. Tout cela s'opère à partir d'un cahier des charges caractérisé par une bande de fréquences ($f_{min} \dots f_{max}$) avec une contrainte de gain et un taux de feuilletage maximal dans cette bande, et un encombrement disponible sur la plateforme pour intégrer les antennes élémentaires de l'ensemble du réseau. Le cahier des charges peut aussi fixer le nombre maximum d'antennes élémentaires pour le réseau afin de s'adapter à un système de réception disponible limité en nombre de voies (cette condition peut aussi être liée à des contraintes de masse, de consommation et de volume de la charge utile).

Le procédé de conception d'antenne réseau selon l'invention est parfaitement adapté pour un réseau conforme à une surface métallique 3D. Pour cela, il comprend la modélisation du gain total des antennes élémentaires ne pointant pas dans la même direction en présence d'une surface 3D. Le diagramme en gain total est ici le gain complexe d'une antenne lorsqu'elle est adaptée à sa polarisation. Ce diagramme se déforme en présence d'une surface. Cette modélisation se fait grâce à une interpolation de la réponse complexe du gain total de l'antenne élémentaire mesurée ou simulée dans tout l'espace angulaire. Cela permet de modéliser une antenne élémentaire en présence de la surface 3D sur laquelle sera installé le réseau. Pour obtenir le gain pour une autre orientation de l'antenne, il suffit ensuite d'effectuer le changement de base entre l'antenne élémentaire dans le référentiel du réseau et celle dans le référentiel de l'antenne réorientée. La même méthode est employée pour la modélisation du gain en polarisation, se caractérisant par les composantes électromagnétiques du réseau d'antennes.

La solution proposée permet de travailler avec des réseaux conformes 3D ayant l'avantage d'avoir du gain à l'horizon ($\Delta$=0°), et une meilleure précision en élévation à l'horizon. Cela a l'avantage d'améliorer les performances des techniques de géolocalisation instantanées pour des sources éloignées à partir d'une goniométrie 2D en gisement et en élévation. Le procédé décrit permet de concevoir des réseaux d'antennes hétérogènes à diversité de polarisation permettant de déterminer la direction d'arrivée d'émetteurs avec une précision quasiment indépendante de leur polarisation, et suivant un secteur angulaire étendu.

**Revendications**

1. Procédé de conception d'un réseau de N antennes disposées sur une surface métallique destinée à isoler le réseau d'antennes de son support, le réseau d'antennes étant sensiblement omnidirectionnel en direction d'arrivée et en polarisation dans une bande de fréquences ayant une fréquence minimum $f_{min}$ et une fréquence maximum $f_{max}$, avec N supérieur à 1, le procédé de conception étant **caractérisé en ce qu'**il comprend les étapes suivantes :

   - une première étape (601) de détermination de K configurations d'antenne ayant des caractéristiques géométriques différentes, avec K supérieur à 1, adaptées pour satisfaire une contrainte de différentiel de gain sur la bande de fréquences [$f_{min}$, $f_{max}$] et une contrainte de variation de gain dans le lobe principal de l'antenne,
   - une deuxième étape (602) de calcul, pour chacune des K configurations d'antenne, d'au moins une configuration de réseau d'antennes, les orientations des N antennes de chaque configuration de réseau d'antennes étant choisies de manière à favoriser l'omnidirectionnalité du réseau d'antennes en polarisation, les dispositions des N antennes de chaque configuration de réseau d'antennes étant choisies de manière à favoriser l'omnidirectionnalité du réseau d'antennes en direction d'arrivée,
   - une troisième étape (603) de sélection du ou des meilleurs couples configuration d'antenne/configuration de réseau d'antennes.

2. Procédé de conception d'un réseau d'antennes selon la revendication 1, dans lequel les antennes sont des antennes de type « pétale », comprenant deux brins (101, 102) repliés vers un plan de masse au centre (102) de l'antenne.

3. Procédé de conception d'un réseau d'antennes selon l'une des revendications 1 et 2, comprenant en outre une quatrième étape (604) d'optimisation de la configuration de la ou des antennes sélectionnées lors de la troisième étape (603), de manière à optimiser les performances du ou des réseaux d'antennes associés.

4. Procédé de conception d'un réseau d'antennes selon la revendication 2 et la revendication 3, ladite optimisation de la configuration de la ou des antennes comprenant la modification d'un paramètre de configuration des antennes parmi : une largeur (W), une forme des brins ($R_1$, $R_2$, $R_3$) et un rayon de courbure des brins ($c_1$, $c_2$).

5. Procédé de conception d'un réseau d'antennes selon l'une des revendications précédentes, dans lequel les N antennes sont identiques.

6. Procédé de conception d'un réseau d'antennes selon l'une des revendications précédentes, dans lequel la première étape et la deuxième étape sont mises en œuvre à partir d'une simulation électromagnétique ou d'une mesure du gain complexe d'une antenne unitaire disposée sur ladite surface métallique.

7. Procédé de conception d'un réseau d'antennes selon l'une des revendications précédentes, dans lequel ladite surface métallique est une portion de sphère métallique.

8. Procédé de conception d'un réseau d'antennes selon l'une des revendications précédentes, dans lequel la première étape (601) comprend la détermination de K' configurations d'antenne ayant des caractéristiques géométriques différentes, avec K' supérieur à K, adaptées pour satisfaire une contrainte de limitation du taux de déformations du lobe principal de rayonnement de l'antenne à la fréquence $f_{max}$, puis pour chaque configuration d'antenne, la détermination d'une bande de fréquences [$f_{min}$, $f_{max}$] répondant à une contrainte de variation du gain pic dans la bande de fréquences, puis la sélection de K configurations d'antenne parmi lesdites K' configurations d'antenne, en considérant la longueur de chaque antenne et la fréquence minimum $f_{min}$ associée.

9. Procédé de conception d'un réseau d'antennes selon l'une des revendications précédentes, dans lequel la deuxième étape (602) comprend :

- l'obtention de gains complexes $G_V(\Theta,f)$ et $G_H(\Theta,f)$ de réponses de l'antenne unitaire aux polarisations $E_\theta$ et $E_\varphi$ suivant des directions d'arrivées $\Theta = \{\theta, \Delta\}$ pour une maille régulière de fréquences comprises dans la bande de fréquences $[f_{min}, f_{max}]$ ;
- pour ladite maille régulière de fréquences f, le calcul de paramètres de modélisation du gain d'antenne, en estimant des composantes électromagnétiques em(f) et des coefficients d'interpolation w(f) du gain total de l'antenne à partir des gains complexes $G_V(\Theta,f)$ et $G_H(\Theta,f)$ ;

puis pour un nombre donné d'itérations :

- la détermination d'orientations ($\mathbf{d}_1,... \mathbf{d}_N$) des antennes favorisant l'omnidirectionnalité du réseau d'antennes en polarisation ;
- la détermination de positions ($\mathbf{p}_1, ... \mathbf{p}_N$) des antennes favorisant l'omnidirectionnalité du réseau d'antennes en direction d'arrivée ;
- le rejet du réseau d'antennes lorsque les positions et orientations des antennes ne sont pas compatibles avec un encombrement maximum du réseau d'antennes ;

et dans lequel la troisième étape (603) comprend, pour chaque couple configuration d'antenne/configuration de réseau d'antennes :

- pour une maille régulière de fréquences comprises dans la bande de fréquences $[f_{min}, f_{max}]$, le calcul à chaque fréquence f d'une robustesse aux ambiguïtés du couple configuration d'antenne/configuration de réseau d'antennes en effectuant :

o à partir des paramètres $\{\mathbf{w}(f), \mathbf{em}(f)\}$ de l'antenne, de la longueur d'onde $\lambda = c/f$, des orientations des antennes $\{\mathbf{d}_n\}$ et de leurs positions $\{\mathbf{p}_n\}$, le calcul des réponses $a_n(\Theta, \mathbf{P}_V)$ et $a_n(\Theta, \mathbf{P}_H)$ des N antennes pour la polarisation $\mathbf{P}_V = [1\ 0]^T$ et $\mathbf{P}_H = [0\ 1]^T$ pour obtenir des vecteurs $\mathbf{a}(O, \mathbf{P}_V)$ et $\mathbf{a}(O, \mathbf{P}_H)$;
o pour chaque direction $\Theta$ à la fréquence f, l'orthonormalisation de la base de vecteurs $\mathbf{a}(O, \mathbf{P}_V)$ et $\mathbf{a}(O, \mathbf{P}_H)$ pour obtenir les colonnes de la matrice $\tilde{\mathbf{U}}(\Theta) = [\mathbf{a}^{co}(\Theta)\ \mathbf{a}^{cross}(\Theta)]$ ;
o le calcul de la robustesse aux ambiguïtés $\eta_1(f)$ du couple configuration d'antenne/configuration de réseau d'antennes à partir de ladite matrice $\tilde{\mathbf{U}}(\Theta)$, la robustesse aux ambiguïtés correspondant à un minimum de la projection de deux plans formés respectivement par des colonnes de $\tilde{\mathbf{U}}(\Theta i)$ et de $\hat{\mathbf{U}}(\Theta j)$ pour tout couple de directions différentes $(\Theta_i, \Theta_j)$ ;

- le calcul de la robustesse aux ambiguïtés du couple configuration d'antenne/configuration de réseau d'antennes $\eta_{réseau} = \min_{fmin \leq f \leq fmax} \eta_1(f)$ ;

le ou les meilleurs couples configuration d'antenne/configuration de réseau d'antennes étant celui ou ceux dont la robustesse aux ambiguïtés $\eta_{réseau}$ est la plus élevée.

10. Procédé de conception d'un réseau d'antennes selon l'une des revendications précédentes, dans lequel le choix des orientations des N antennes de la deuxième étape (602) comprend :

- le tirage aléatoire de N-1 valeurs $x_2$ à $x_N$, avec $x_1=1$,
- la construction d'un vecteur $\tilde{\mathbf{b}}(\alpha) = \mathbf{b}(\varphi = \{\varphi_1 = x_1\alpha \cdots \varphi_N = x_N\alpha\})$ , avec $\mathbf{b}(\varphi) = \mathbf{c}(\varphi) + j\mathbf{s}(\varphi)$,

$$\mathbf{c}(\boldsymbol{\varphi}) = \begin{bmatrix} \cos(\varphi_1) \\ ... \\ \cos(\varphi_N) \end{bmatrix} \text{ et } \mathbf{s}(\boldsymbol{\varphi}) = \begin{bmatrix} sin(\varphi_1) \\ ... \\ sin(\varphi_N) \end{bmatrix},$$

- le calcul d'un angle $\alpha_{min}$ minimisant un critère d'orthogonalité $C_\varphi(\alpha) = \tilde{\mathbf{b}}^T(\alpha)\tilde{\mathbf{b}}(\alpha)$,
- le calcul de phases de directions $\{\varphi_1 = x_1\alpha_{min} \cdots \varphi_N = x_N\alpha_{min}\}$ des N antennes ;
- le calcul d'orientations ($\mathbf{d}_1,... \mathbf{d}_N$) des antennes, à partir des phases de direction $\varphi_n$ des N antennes.

11. Procédé de conception d'un réseau d'antennes selon l'une des revendications précédentes, dans lequel le choix de la position des N antennes de la deuxième étape (602) comprend les étapes de :

- tirage aléatoire de N positions d'antennes $\mathbf{p}_n^0 = [\mathrm{x}_n \ \mathrm{y}_n]^T$ dans un plan horizontal,

- calcul d'une matrice $\widetilde{\boldsymbol{D}}_{pp}^{géo}$ d'ouverture équivalente du réseau d'antennes, avec

$$\tilde{\mathbf{D}}_{pp}{}^{geo} = \sum_{n=1}^{N}\left(\mathbf{p}_n{}^0 - \overline{\mathbf{p}}\right)\left(\mathbf{p}_n{}^0 - \overline{\mathbf{p}}\right)^T / N \text{ , et } \overline{\mathbf{p}} = \sum_{n=1}^{N}\mathbf{p}_n{}^0 / N \text{ ,}$$

- décomposition de la matrice $\widetilde{\boldsymbol{D}}_{pp}^{géo}$ en éléments propres, avec $\tilde{\mathbf{D}}_{pp}{}^{geo} = \mathbf{E}\Lambda\mathbf{E}^H$, où E est une matrice des vecteurs propres de $\widetilde{\boldsymbol{D}}_{pp}^{géo}$ et $\Lambda$ une matrice diagonale des valeurs propres de $\widetilde{\boldsymbol{D}}_{pp}^{géo}$ ,

- calcul d'une matrice **W** de blanchiment, avec $\mathbf{W} = \mathbf{E}\Lambda^{1/2}$
- calcul d'un jeu de positions d'antennes $\mathbf{p}_n{}^1 = \mathbf{W}^{-1}(\mathbf{p}_n{}^0 - \overline{\mathbf{p}})$,

- calcul d'un encombrement du réseau $\mathbf{p}_n^1$ ,

- redimensionnement du réseau $\mathbf{p}_n^1$ par l'application d'un rapport homothétique entre un encombrement associé aux positions $\{\mathbf{p}_n^1,\}$ et un encombrement maximum spécifié.

**12.** Procédé de conception d'un réseau d'antennes selon l'une des revendications 10 et 11, dans lequel la surface métallique est non plane, le choix de la position des N antennes et/ou de l'orientation des N antennes de la deuxième étape (602) comprend en outre une étape de projection des positions et/ou orientations sur la surface métallique.

**Patentansprüche**

**1.** Verfahren zur Gestaltung eines Netzes von N Antennen, die auf einer metallischen Oberfläche angeordnet werden, die dazu gedacht ist, das Antennennetz von seinem Träger zu isolieren, wobei das Antennennetz in der Eintrittsrichtung und bei Polarisation in einem Frequenzbereich mit einer Mindestfrequenz $f_{min}$ und einer Höchstfrequenz $f_{max}$ im Wesentlichen ungerichtet ist, wobei N größer als 1 ist, wobei das Gestaltungsverfahren **dadurch gekennzeichnet ist, dass** es die folgenden Schritte umfasst:

- einen ersten Schritt (601) zum Bestimmen von K Antennenkonfigurationen mit verschiedenen geometrischen Kennzeichen, wobei K größer als 1 ist, die dazu geeignet sind, eine Verstärkungsdifferenzspannung in dem Frequenzbereich [$f_{min}$, $f_{max}$] und eine Verstärkungsvariationsspannung in der Hauptkeule der Antenne zu erfüllen,
- einen zweiten Schritt (602) zum Berechnen, für jede der K Antennenkonfigurationen, mindestens einer Antennennetzkonfiguration, wobei die Ausrichtungen der N Antennen jeder Antennennetzkonfiguration derart ausgewählt werden, dass der ungerichtete Zustand des Antennennetzes bei Polarisation favorisiert wird, wobei die Anordnungen der N Antennen jeder Antennennetzkonfiguration derart ausgewählt werden, dass der ungerichtete Zustand des Antennennetzes in der Eintrittsrichtung favorisiert wird,
- einen dritten Schritt (603) zum Auswählen des / der besten Paars-Paare aus Antennenkonfiguration/Antennennetzkonfiguration.

**2.** Verfahren zum Gestalten eines Antennennetzes nach Anspruch 1, wobei die Antennen Antennen vom Typ "Keule" sind, die zwei Adern (101, 102) umfassen, die in Richtung einer Masseebene im Zentrum (102) der Antenne gefaltet sind.

**3.** Verfahren zum Gestalten eines Antennennetzes nach einem der Ansprüche 1 und 2, ferner umfassend einen vierten Schritt (604) zum Optimieren der Konfiguration der im dritten Schritt (603) ausgewählten Antenne(n), um die Leistungen des oder der zugeordneten Antennennetze(s) zu optimieren.

**4.** Verfahren zum Gestalten eines Antennennetzes nach Anspruch 2 und Anspruch 3, wobei die Optimierung der Konfiguration der Antenne(n) das Modifizieren eines Konfigurationsparameters der Antennen aus den Folgenden umfasst: einer Breite (W), einer Form der Adern ($R_1$, $R_2$, $R_3$) und einem Krümmungsradius der Adern ($c_1$, $c_2$).

**5.** Verfahren zum Gestalten eines Antennennetzes nach einem der vorhergehenden Ansprüche, wobei die N Antennen identisch sind.

6. Verfahren zum Gestalten eines Antennennetzes nach einem der vorhergehenden Ansprüche, wobei der erste Schritt und der zweite Schritt anhand einer elektromagnetischen Simulation oder einer Messung der komplexen Verstärkung einer unitären Antenne, die auf der metallischen Oberfläche angeordnet ist, ungesetzt werden.

7. Verfahren zum Gestalten eines Antennennetzes nach einem der vorhergehenden Ansprüche, wobei es sich bei der metallischen Oberfläche um einen metallischen Kugelabschnitt handelt.

8. Verfahren zum Gestalten eines Antennennetzes nach einem der vorhergehenden Ansprüche, wobei der erste Schritt (601) das Bestimmen von K' Antennenkonfigurationen mit verschiedenen geometrischen Kennzeichen, wobei K' größer als K ist, die dazu geeignet sind, eine Grenzspannung des Formänderungsverhältnisses der Hauptstrahlungskeule der Antenne bei der Frequenz $f_{max}$ zu erfüllen, dann, für jede Antennenkonfiguration, das Bestimmen eines Frequenzbereichs $[f_{min}, f_{max}]$ umfasst, der einer Variationsspannung der Spitzenverstärkung in dem Frequenzbereich entspricht, dann das Auswählen von K Antennenkonfigurationen aus den K' Antennenkonfigurationen unter Berücksichtigung der Länge jeder Antenne und der zugeordneten Mindestfrequenz $f_{min}$ umfasst.

9. Verfahren zum Gestalten eines Antennennetzes nach einem der vorhergehenden Ansprüche, wobei der zweite Schritt (602) Folgendes umfasst:

- Erhalten von komplexen Verstärkungen $G_V(\Theta, f)$ und $G_H(\Theta, f)$ von Reaktionen der unitären Antenne auf die Polarisationen $E_\theta$ und $E_\varphi$ gemäß Eintrittsrichtungen $\Theta = \{\theta, \Delta\}$ für eine gleichmäßige Frequenzvermaschung, die in dem Frequenzbereich $[f_{min}, f_{max}]$ enthalten ist;
- für die gleichmäßige Frequenzvermaschung $f$, Berechnen von Modellisierungsparametern der Antennenverstärkung durch Schätzen von elektromagnetischen Komponenten em(f) und Interpolationskoeffizienten w(f) der Gesamtverstärkung der Antenne anhand der komplexen Verstärkungen $G_V(\Theta,f)$ und $G_H(\Theta, f)$;
dann, für eine gegebene Anzahl an Wiederholungen:

- Bestimmen von Ausrichtungen ($d_1, ... d_N$) der Antennen, die den ungerichteten Zustand des Antennennetzes bei Polarisation favorisieren;
- Bestimmen von Positionen ($p_1, ... p_N$) der Antennen, die den ungerichteten Zustand des Antennennetzes in der Eintrittsrichtung favorisieren;
- Ablehnen des Antennennetzes, wenn die Positionen und Ausrichtungen der Antennen nicht mit einer maximalen Grundfläche des Antennennetzes kompatibel sind;

und wobei der dritte Schritt (603) für jedes Paar aus Antennenkonfiguration/Antennennetzkonfiguration Folgendes umfasst:

- für eine gleichmäßige Frequenzvermaschung, die in dem Frequenzbereich $[f_{min}, f_{max}]$ enthalten ist, Berechnen, bei jeder Frequenz f, einer Beständigkeit gegenüber den Unbestimmtheiten des Paares aus Antennenkonfiguration/Antennennetzkonfiguration durch Durchführen von Folgendem:

∘ anhand der Parameter {w(f), em(f)} der Antenne, der Wellenlänge $\lambda = c/f$, der Ausrichtungen der Antennen {$d_n$} und ihrer Positionen {$p_n$}, Berechnen der Reaktionen $a_n(\Theta, P_V)$ und $a_n(\Theta, P_H)$ der N Antennen für die Polarisation $P_V = [1\ 0]^T$ und $P_H = [0\ 1]^T$, um Vektoren $a(\Theta, P_V)$ und $a(\Theta, P_H)$ zu erhalten;
∘ für jede Richtung $\Theta$ bei der Frequenz f, Orthonormieren der Vektorbasis a($\Theta$, $P_V$) und a(0, $P_H$), um die Spalten der Matrix $\tilde{U}(\Theta) = [a^{co}(\Theta)\ a^{cross}(\Theta)]$ zu erhalten;
∘ Berechnen der Beständigkeit gegenüber den Unbestimmtheiten $\eta_1(f)$ des Paares aus Antennenkonfiguration/Antennennetzkonfiguration anhand der Matrix $\tilde{U}(\Theta)$, wobei die Beständigkeit gegenüber den Unbestimmtheiten einem Minimum der Projektion von zwei jeweils durch Spalten von $\tilde{U}(\Theta i)$ und von $\tilde{U}(\Theta j)$ gebildeten Ebenen für jedes Paar von verschiedenen Richtungen ($\Theta_i, \Theta_j$) entspricht;

- Berechnen der Beständigkeit gegenüber den Unbestimmtheiten des Paares aus Antennenkonfiguration/Antennennetzkonfiguration $\eta_{Netz} = min_{fmin \leq f \leq fmax}\ \eta_1(f)$;;

wobei das beste oder die besten Paar(e) aus Antennenkonfiguration/Antennennetzkonfiguration dasjenige ist oder diejenigen sind, deren Beständigkeit gegenüber den Unbestimmtheiten $\eta_{Netz}$ die größte ist.

**10.** Verfahren zum Gestalten eines Antennennetzes nach einem der vorhergehenden Ansprüche, wobei die Wahl der Ausrichtungen der N Antennen des zweiten Schritts (602) Folgendes umfasst:

- zufälliges Auswählen von N-1 Werten $x_2$ bis $x_N$, wobei $x_1 = 1$,

- Erstellen eines Vektors $\tilde{\mathbf{b}}(\alpha) = \mathbf{b}(\varphi = \{\varphi_1 = x_1\alpha \cdots \varphi_N = x_N\alpha\})$, wobei $\boldsymbol{b}(\varphi) = \boldsymbol{c}(\varphi) + j\boldsymbol{s}(\varphi)$, $\boldsymbol{c}(\boldsymbol{\varphi}) = \begin{bmatrix} \cos(\varphi_1) \\ \cdots \\ \cos(\varphi_N) \end{bmatrix}$

$$\boldsymbol{s}(\boldsymbol{\varphi}) = \begin{bmatrix} sin(\varphi_1) \\ \cdots \\ sin(\varphi_N) \end{bmatrix},$$

- Berechnen eines Winkels $\alpha_{min}$, der ein Kriterium des orthogonalen Zustands $C_\varphi(\alpha) = \tilde{\mathbf{b}}^T(\alpha)\tilde{\mathbf{b}}(\alpha)$ minimiert,
- Berechnen von Richtungsphasen $\{\varphi_1 = x_1\alpha_{min} \cdots \varphi_N = x_N\alpha_{min}\}$ der $N$ Antennen;
- Berechnen von Ausrichtungen $(d_1, \ldots d_N)$ der Antennen anhand der Richtungsphasen $\varphi_n$ der N Antennen.

**11.** Verfahren zum Gestalten eines Antennennetzes nach einem der vorhergehenden Ansprüche, wobei die Wahl der Position der N Antennen des zweiten Schritts (602) die folgenden Schritte umfasst:

- zufälliges Auswählen von N Antennenpositionen $\mathbf{p}_n^0 = [\mathrm{x}_n \; \mathrm{y}_n]^T$ in einer horizontalen Ebene,

- Berechnen einer Matrix $\widetilde{D}_{pp}^{g\acute{e}o}$ mit einer Öffnung äquivalent zum Antennennetz, wobei

$$\tilde{\mathbf{D}}_{pp}^{\;geo} = \sum_{n=1}^{N}\left(\mathbf{p}_n^{\;0} - \bar{\mathbf{p}}\right)\left(\mathbf{p}_n^{\;0} - \bar{\mathbf{p}}\right)^T / N \quad \text{und} \quad \bar{\mathbf{p}} = \sum_{n=1}^{N}\mathbf{p}_n^{\;0}/N,$$

- Zerlegen der Matrix $\widetilde{D}_{pp}^{g\acute{e}o}$ in Eigenelemente, wobei $D_{pp}^{\;geo} = E\Lambda E^H$, worin E eine Matrix von Eigenvektoren von $\widetilde{D}_{pp}^{g\acute{e}o}$ ist und $\Lambda$ eine diagonale Matrix der Eigenwerte von $\widetilde{D}_{pp}^{g\acute{e}o}$ ist,
- Berechnen einer Whitening-Matrix W, wobei $W = E\Lambda^{1/2}$,
- Berechnen eines Satzes von Antennenpositionen $p_n^1 = W^{-1}(p_n^0 - p)$,

- Berechnen einer Grundfläche des Netzes $\mathbf{p}_n^1$,

- Neudimensionieren des Netzes $\mathbf{p}_n^1$ durch Anwendung einer homothetischen Beziehung zwischen einer den

Positionen $\{\mathbf{p}_n^1,\}$ zugeordneten Grundfläche und einer spezifizierten maximalen Grundfläche.

**12.** Verfahren zum Gestalten eines Antennennetzes nach einem der Ansprüche 10 und 11, wobei die metallische Oberfläche nicht eben ist, die Wahl der Position der N Antennen und/oder der Ausrichtung der N Antennen des zweiten Schritts (602) ferner einen Schritt zum Projizieren der Positionen und/oder Ausrichtungen auf die metallische Oberfläche umfasst.

**Claims**

**1.** A method for designing an array of N antennas disposed on a metal surface intended to isolate the antenna array from its support, the antenna array being substantially omnidirectional for direction of arrival and for polarisation in a frequency band with a minimum frequency $f_{min}$ and a maximum frequency $f_{max}$, with N being greater than 1, the design method being **characterised in that** it comprises the following steps:

- a first step (601) of determining K antenna configurations with different geometric features, with K being greater than 1, adapted to meet a gain differential constraint on the frequency band $[f_{min}, f_{max}]$ and a gain variation constraint in the main lobe of the antenna;

- a second step (602) of computing, for each of the K antenna configurations, at least one antenna array configuration, with the orientations of the N antennas of each antenna array configuration being selected so as to promote the omnidirectionality of the antenna array for polarisation, with the arrangements of the N antennas of each antenna array configuration being selected so as to promote the omnidirectionality of the antenna array for direction of arrival;
- a third step (603) of selecting the one or more best antenna configuration/antenna array configuration pairs.

2. The method for designing an antenna array according to claim 1, wherein the antennas are petal-type antennas, comprising two strands (101, 102) folded towards a ground plane at the centre (102) of the antenna.

3. The method for designing an antenna array according to any of claims 1 and 2, further comprising a fourth step (604) of optimising the configuration of the one or more antennas selected during the third step (603), so as to optimise the performance capabilities of the one or more associated antenna arrays.

4. The method for designing an antenna array according to claim 2 and claim 3, said optimisation of the configuration of the one or more antennas comprising modifying a configuration parameter of the antennas from among: a width (W), a shape of the strands ($R_1$, $R_2$, $R_3$) and a radius of curvature of the strands ($c_1$, $c_2$).

5. The method for designing an antenna array according to any of the preceding claims, wherein the N antennas are identical.

6. The method for designing an antenna array according to any of the preceding claims, wherein the first step and the second step are implemented from an electromagnetic simulation or a measurement of the complex gain of a unit antenna disposed on said metal surface.

7. The method for designing an antenna array according to any of the preceding claims, wherein said metal surface is a metal sphere portion.

8. The method for designing an antenna array according to any of the preceding claims, wherein the first step (601) comprises determining K' antenna configurations with different geometric features, with K' being greater than K, adapted to meet a constraint of limiting the deformation rate of the main radiation lobe of the antenna at the frequency $f_{max}$, then determining, for each antenna configuration, a frequency band [$f_{min}$, $f_{max}$] addressing a variation constraint of the peak gain in the frequency band, and then selecting K antenna configurations from among said K' antenna configurations, while considering the length of each antenna and the associated minimum frequency $f_{min}$.

9. The method for designing an antenna array according to any of the preceding claims, wherein the second step (602) comprises:

- obtaining complex gains $G_V(\Theta, f)$ and $G_H(\Theta, f)$ of responses of the unit antenna to the polarisations $E_\theta$ and $E_\varphi$ along directions of arrival $\Theta = \{\theta, \Delta\}$ for a regular mesh of frequencies comprised in the frequency band [$f_{min}$, $f_{max}$];
- computing, for said regular mesh of frequencies $f$, modelling parameters of the antenna gain, by estimating electromagnetic components em($f$) and interpolation coefficients w($f$) of the total gain of the antenna from the complex gains $G_V(\Theta, f)$ and $G_H(\Theta, f)$;
then, for a given number of iterations:

- determining orientations ($d_1$,... $d_N$) of the antennas promoting the omnidirectionality of the antenna array for polarisation;
- determining positions ($p_1$,... $p_N$) of the antennas promoting the omnidirectionality of the antenna array for direction of arrival;
- rejecting the antenna array when the positions and orientations of the antennas are not compatible with a maximum footprint of the antenna array;

and wherein the third step (603) comprises, for each antenna configuration/antenna array configuration pair:

- computing, for a regular mesh of frequencies comprised in the frequency band [$f_{min}$, $f_{max}$], at each frequency $f$, a resilience to the ambiguities of the antenna configuration/antenna array configuration pair by performing the following:

○ computing, from the parameters {w(f), em(f)} of the antenna, the wavelength $\lambda = c/f$, the orientations of the antennas $\{d_n\}$ and their positions $\{p_n\}$, the responses $a_n(\Theta, P_V)$ and $a_n(\Theta, P_H)$ of the $N$ antennas for the polarization $P_V = [1\ 0]^T$ and $P_H = [1\ 0]^T$ in order to obtain vectors $a(\Theta, P_V)$ and $a(\Theta, P_H)$;

○ orthonormalising, for each direction $\Theta$ at the frequency f, the vector base $a(\Theta, P_V)$ and $a(\Theta, P_H)$ in order to obtain the columns of the matrix $\breve{U}(\Theta) = [a^{co}(\Theta)\ a^{cross}(\Theta)]$;

○ computing the resilience to the ambiguities $\eta_1(f)$ of the antenna configuration/antenna array configuration pair from said matrix $\breve{U}(\Theta)$, the resilience to the ambiguities corresponding to a minimum of the projection of two planes respectively formed by columns of $\breve{U}(\Theta i)$ and $\breve{U}(\Theta j)$ for any pair of different directions $(\Theta_i, \Theta_j)$;

- computing the resilience to the ambiguities of the antenna configuration/antenna array configuration pair $\eta_{network} = min_{fmin \leq f \leq fmax}\ \eta_1(f)$;

with the one or more best antenna configuration/antenna array configuration pairs being the one or those whose resilience to the ambiguities $\eta_{network}$ is highest.

10. The method for designing an antenna array according to any of the preceding claims, wherein selecting the orientations of the N antennas of the second step (602) comprises:

- randomly drawing N -1 values $x_2$ to $x_N$, with $x_1 = 1$;

- constructing a vector $\breve{b}(\alpha) = b(\varphi = \{\varphi_1 = x_1\alpha \cdots \varphi_N = x_N\alpha\})$, with $b(\varphi) = c(\varphi) + js(\varphi)$, $\boldsymbol{c(\varphi)} = \begin{bmatrix} \cos(\varphi_1) \\ \cdots \\ \cos(\varphi_N) \end{bmatrix}$ and

$$\boldsymbol{s(\varphi)} = \begin{bmatrix} \sin(\varphi_1) \\ \cdots \\ \sin(\varphi_N) \end{bmatrix};$$

- computing an angle $\alpha_{min}$ minimizing an orthogonality criterion $C_\varphi(\alpha) = \breve{b}^T(\alpha)\breve{b}(\alpha)$;
- computing phases of directions $\{\varphi_1 = x_1\alpha_{min} \cdots \varphi_N = x_N\alpha_{min}\}$ of the $N$ antennas;
- computing orientations $(d_1,... d_N)$ of the antennas from the direction phases $\varphi_n$ of the $N$ antennas.

11. The method for designing an antenna array according to any of the preceding claims, wherein selecting the position of the N antennas of the second step (602) comprises the following steps of:

- randomly drawing N antenna positions $\mathbf{p}_n^0 = [\mathbf{x}_n\ \mathbf{y}_n]^T$ in a horizontal plane;

- computing an equivalent aperture matrix $\widetilde{D}_{pp}^{géo}$ of the antenna array, with

$$\tilde{\mathbf{D}}_{pp}{}^{geo} = \sum_{n=1}^{N}\left(\mathbf{p}_n{}^0 - \overline{\mathbf{p}}\right)\left(\mathbf{p}_n{}^0 - \overline{\mathbf{p}}\right)^T / N, \text{ and } \overline{\mathbf{p}} = \sum_{n=1}^{N}\mathbf{p}_n{}^0 / N;$$

- dividing the matrix $\widetilde{D}_{pp}^{géo}$ into eigen elements, with $\tilde{D}_{pp}{}^{geo} = E\Lambda E^H$, where E is a matrix of the eigenvectors of $\widetilde{D}_{pp}^{géo}$ and $\Lambda$ is a diagonal matrix of the eigenvalues of $\widetilde{D}_{pp}^{géo}$;
- computing a whitening matrix W, with $W = E\Lambda^{1/2}$;
- computing a set of antenna positions $p_n^1 = W^{-1}(p_n^0 - \overline{p})$;

- computing a footprint of the network $\mathbf{p}_n^1$;

- resizing the network $\mathbf{p}_n^1$ by applying a homothety ratio between a footprint associated with the positions $\{\mathbf{p}_n^1,\}$ and a specified maximum footprint.

12. The method for designing an antenna array according to any of claims 10 and 11, wherein the metal surface is non-planar, selecting the position of the N antennas and/or the orientation of the N antennas of the second step (602) further comprises a step of projecting the positions and/or orientations onto the metal surface.

FIG.1a

FIG.1b

FIG.1c

FIG.2

FIG.3a

FIG.3b

FIG.4a

FIG.4b

FIG.4c

FIG.5

Calcul d'une pluralité de configurations d'antennes — 601

Calcul d'une pluralité de positions/orientation des antennes par configuration d'antennes — 602

Sélection d'un couple antenne / réseau d'antennes — 603

Optimisation de la configuration d'antenne — 604

FIG.6

$d_n' = d_0'$

701

$q_n' = - \eta_n' \wedge d_n'$

$\eta_n'$

$\Delta'$

$\theta'$

FIG.7a

FIG.7b

$$V(t)=G^{dip\^ole}(\theta,\Delta)s(t)$$

Dipôle

FIG.8a

$$V(t)=G^{boucle}(\theta,\Delta)s(t)$$

Boucle

$E_0$

$H_0$

$k(\theta,\Delta)$

s(t)

u

## FIG.8b

901

902

903

$\theta_m$

$\Delta_m$

n

$p_n$

O

$k(\Theta_m)$

## FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20210305693 A1
- EP 3335277 B1
- EP 2462459 B1
- EP 2458398 A2

**Littérature non-brevet citée dans la description**

- **JEAN-MARIE LE FLOCH et al.** *ICEM-CE modelling view project*
- **ANNE FERREOL ; PASCAL CHEVALIER**. High Resolution Direction Finding : From Performance to Antenna Array Optimization - The mono-source case. *EUSIPCO*, August 2009